# EUROPEAN PATENT APPLICATION

(11) **EP 4 835 646 A1**
(43) Date of publication of application: **04.11.2026**
(21) Application number: 26171657.5
(22) Date of filing: 10.04.2026
(51) Int. Cl.: G06F 8/30, G06F 8/10, G06F 8/20, G06N 3/006, G06N 3/0475, G06N 20/00

(54) **BUILDING AND USE OF INDUSTRIAL AUTOMATION CONTROL NARRATIVES THROUGH ARTIFICIAL INTELLIGENCE**

(30) Priority: 30.04.2025 US 202519195454
(71) Applicant: Rockwell Automation Technologies, Inc., Mayfield Heights, OH 44124 (US)
(72) Inventor: Fernandes, Fabiano, Mayfield Heights, OH, 44124 (US); Carrara, Anthony, Mayfield Heights, OH, 44124 (US); Pantea, Adrian D., Mayfield Heights, OH, 44124 (US); Sargent, Kevin R., Mayfield Heights, OH, 44124 (US); Ohlsen, Michael J., Mayfield Heights, OH, 44124 (US); Hays, Christopher S., Mayfield Heights, OH, 44124 (US); Adamczak, Ewelina, Mayfield Heights, OH, 44124 (US); Barr, Amanda, Mayfield Heights, OH, 44124 (US); Grajales Alzate, Anderson Daniel, Mayfield Heights, OH, 44124 (US)
(74) Representative: Grünecker Patent- und Rechtsanwälte PartG mbB

(57) **Abstract**

An integrated development environment (IDE) leverages trained development agents to generate industrial system projects based on analysis of design artifacts such as engineering drawings and functional descriptions. The development agents are designed to perform different specialized roles within the project development process, and can include developer agents, researcher agents, architect agents, tester agents, observer agents, user proxy agents, or agents designed to perform other project development functions. The agents are capable of cooperating with one another, as well as with a generative artificial intelligence (AI) model, such as a large language model (LLM), to facilitate learning about the automation system for which the project is being developed, planning a control project development strategy, and building out the control project in accordance with the strategy.

## Description

### TECHNICAL FIELD

The subject matter disclosed herein relates generally to industrial automation systems, and, for example, to industrial programming development platforms.

### BACKGROUND ART

The various control, monitoring, and analytical devices that make up an industrial environment are typically programmed or configured using respective configuration applications specific to each type of device. For example, industrial controllers are typically configured and programmed using a control programming development application such as a ladder logic editor. Using such development platforms, a designer can write control programming for carrying out a desired industrial sequence or process and download the resulting program files to the controller.

The conventional approach to configuring and programming industrial devices to carry out prescribed manufacturing processes requires not only specialized knowledge of the programming languages and device configuration settings used to configure the devices, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions.

### BRIEF DESCRIPTION

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments, a system is provided, comprising a user interface component configured to render an integrated development environment (IDE) interface and to import, via the IDE interface, one or more design artifacts comprising engineering documentation for an industrial automation system; a generative artificial intelligence (AI) component configured to, using trained collaborative agents having generative AI capabilities, generate a functional summary of the industrial automation system based on analysis of the design artifacts, formulate a design strategy for creating a system project for monitoring and controlling the industrial automation system based on analysis of the functional summary, and generate the system project in accordance with the design strategy; and a project generation component configured to output the system project generated by the trained collaborative agents, the system project comprising at least control code that, in response to execution on an industrial controller, causes the industrial controller to monitor and control the industrial automation system.

Also, one or more embodiments provide a method, comprising rendering, by an industrial integrated development environment (IDE) system comprising a processor, an IDE interface on a client device; importing, by the industrial IDE system via the IDE interface, one or more design artifacts comprising engineering documentation for an industrial automation system; generating, by the industrial IDE system using trained collaborative agents having generative AI capabilities, a functional summary of the industrial automation system based on analysis of the design artifacts; formulating, by the industrial IDE system using the trained collaborative agents, a design strategy for creating a system project for monitoring and controlling the industrial automation system based on analysis of the functional summary; generating, by the industrial IDE system using the trained collaborative agents, the system project in accordance with the design strategy; and outputting, by the industrial IDE system, the system project generated by the trained collaborative agents, wherein the system project comprises at least control code that, in response to execution on an industrial controller, causes the industrial controller to monitor and control the industrial automation system.

Also, according to one or more embodiments, a non-transitory computer-readable medium is provided having stored thereon instructions that, in response to execution, cause an industrial integrated development environment (IDE) to perform operations, the operations comprising rendering an IDE interface on a client device; importing, via the IDE interface, one or more design artifacts comprising engineering documentation for an industrial automation system; generating, using trained collaborative agents having generative AI capabilities, a functional summary of the industrial automation system based on analysis of the design artifacts; formulating, using the trained collaborative agents, a design strategy for creating a system project for monitoring and controlling the industrial automation system based on analysis of the functional summary; generating, using the trained collaborative agents, the system project in accordance with the design strategy; and outputting the system project generated by the trained collaborative agents, wherein the system project comprises at least control code that, in response to execution on an industrial controller, causes the industrial controller to monitor and control the industrial automation system.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of an example integrated development environment (IDE) system.
FIG. 3 is a diagram illustrating a generalized architecture of the industrial IDE system.
FIG. 4 is a diagram illustrating example smart object properties that can be leveraged by the IDE system in connection with building, deploying, and executing a system project.
FIG. 5 is a diagram illustrating example data flows associated with creation of a system project for an automation system being designed using IDE system.
FIG. 6 is a diagram illustrating training of agents used by the IDE system.
FIG. 7 is a diagram illustrating commissioning of a system project.
FIG. 8 is an example project development interface that can be rendered by one or more embodiments of the industrial IDE system.
FIG. 9 is a view of the project development interface in which a user has begun development of industrial control code via interaction with the workspace canvas.
FIG. 10 is another view of the project development interface in which the user has invoked a generative AI copilot window.
FIG. 11 is a view of the example copilot window in isolation.
FIG. 12 is a diagram illustrating a general overview of the use of industry-specific AI-capable development agents in connection with generating a system project.
FIG. 13 is a diagram illustrating example interactions and outputs of the development agents in connection with performing the explore stage of project development.
FIG. 14 is a diagram illustrating example interactions and outputs of the development agents in connection with performing the plan stage of project development.
FIG. 15 is a diagram illustrating example interactions and outputs of the development agents in connection with performing the build stage of project development.
FIG. 16 illustrates example agent interactions associated with a discover stage, in which an observer agent answers a user's questions about a project or generates summary information for the project.
FIG. 17a is a flowchart of a first part of an example methodology for translating, using AI-enabled agents, a set of design artifacts for an industrial automation system into a system project for configuring, monitoring, controlling, or visualizing the automation system.
FIG. 17b is a flowchart of a second part of the example methodology for translating, using AI-enabled agents, a set of design artifacts for an industrial automation system into a system project for configuring, monitoring, controlling, or visualizing the automation system.
FIG. 17c is a flowchart of a third part of the example methodology for translating, using AI-enabled agents, a set of design artifacts for an industrial automation system into a system project for configuring, monitoring, controlling, or visualizing the automation system.
FIG. 17d is a flowchart of a fourth part of the example methodology for translating, using AI-enabled agents, a set of design artifacts for an industrial automation system into a system project for configuring, monitoring, controlling, or visualizing the automation system.
FIG. 17e is a flowchart of a fifth part of the example methodology for translating, using AI-enabled agents, a set of design artifacts for an industrial automation system into a system project for configuring, monitoring, controlling, or visualizing the automation system.
FIG. 18 is a flowchart of an example methodology for using AI-enabled agents that support workflow triggers to translate design artifacts for an automation system into a control project for monitoring, controlling, or visualizing the automation system.
FIG. 19 is a flowchart of an example methodology for the user interface frontend of an industrial IDE system using a IDE system's generative AI backend.
FIG. 20a is a flowchart of a first part of an example methodology for using AI-capable agents, including a user proxy agent, to translate a set of design artifacts for an industrial automation system into a system project for configuring, monitoring, controlling, or visualizing the automation system.
FIG. 20b is a flowchart of a second part of the example methodology for using AI-capable agents, including a user proxy agent, to translate a set of design artifacts for an industrial automation system into a system project for configuring, monitoring, controlling, or visualizing the automation system.
FIG. 21 is an example computing environment.
FIG. 22 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

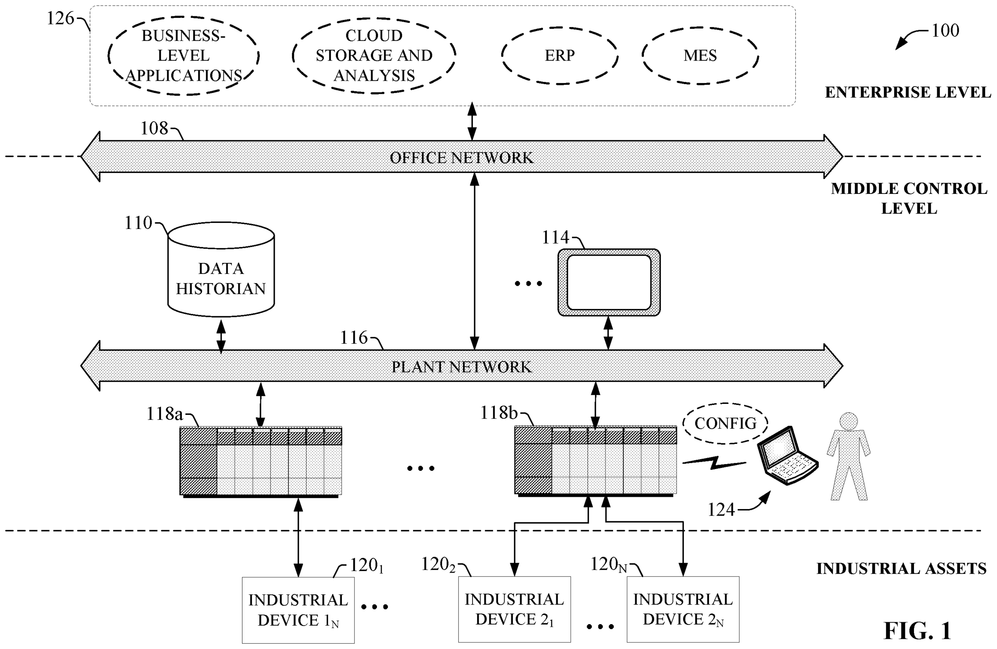

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise substantially any type of code capable of processing input signals read from the industrial devices 120 and controlling output signals generated by the industrial controllers 118, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, pumps, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by their associated control programs and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, device documentation stores containing electronic documentation for the various industrial devices making up the controlled industrial systems, inventory tracking systems, work order management systems, repositories for machine or process drawings and documentation, vendor product documentation storage, vendor knowledgebases, internal knowledgebases, work scheduling applications, or other such systems, some or all of which may reside on an office network 108 of the industrial environment.

Higher-level systems 126 may carry out functions that are less directly related to control of the industrial automation systems on the plant floor, and instead are directed to long term planning, high-level supervisory control, analytics, reporting, or other such high-level functions. These systems 126 may reside on the office network 108 at an external location relative to the plant facility, or on a cloud platform with access to the office and/or plant networks. Higher-level systems 126 may include, but are not limited to, cloud storage and analysis systems, big data analysis systems, manufacturing execution systems, data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

The various control, monitoring, and analytical devices that make up an industrial environment are typically programmed or configured using respective configuration applications specific to each type of device. For example, industrial controllers 118 are typically configured and programmed using a control programming development application such as a ladder logic editor (e.g., executing on a client device 124). Using such development platforms, a designer can write control programming (e.g., ladder logic, structured text, function block diagrams, etc.) for carrying out a desired industrial sequence or process and download the resulting program files to the controller 118. Similarly, designers typically use visualization development platforms to create HMI applications that are downloaded to, and executed on, HMI terminals 114 to visualize the industrial processes. Some industrial devices may also require specialized configuration software to modify or set the configuration parameters on those devices.

The conventional approach to configuring and programming industrial controllers 118 to carry out prescribed manufacturing processes requires not only specialized knowledge of the programming languages and device configuration settings used to configure the controllers, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions.

To address at least some of these or other issues, one or more embodiments described herein provide an integrated development environment (IDE) for designing, programming, and configuring aspects of an industrial automation system using generative artificial intelligence (AI) techniques. Embodiments of the industrial IDE make use of generative AI-enabled project development agents of various types to analyze design artifacts for an industrial automation system, plan a strategy for building a control project for the system based on information learned from these artifacts, and to generate portions of the control project - including control code, code commentary, data tags, I/O or device configurations, or other such project elements - in accordance with the design plan. These agents are designed to perform respective different functions of the project development cycle, and can include, for example, developer agents, researcher agents, architect agents, tester agents, observer agents, or agents designed to perform other project development functions. The agents are capable of cooperating with one another, as well as with a generative artificial intelligence (AI) model, such as a large language model (LLM), to facilitate learning about the automation system for which the project is being developed, planning a control project development strategy, and building out the control project in accordance with the strategy.

The agents can be trained using knowledge of various types of industrial control applications, knowledge of specific industrial verticals (e.g., automotive, pharmaceutical, food and drug, oil and gas, mining, textiles, power generation, etc.), vertical-specific industrial standards and best practices, and other such training data. This domain-specific training allows the agents to carry out their specialized project development functions as well as to, as needed, generate prompts or meta-prompts for submission to the generative AI model. Users can interact with the IDE system, and with the project development agents, via intuitive natural language inputs (e.g., spoken or written natural language text).

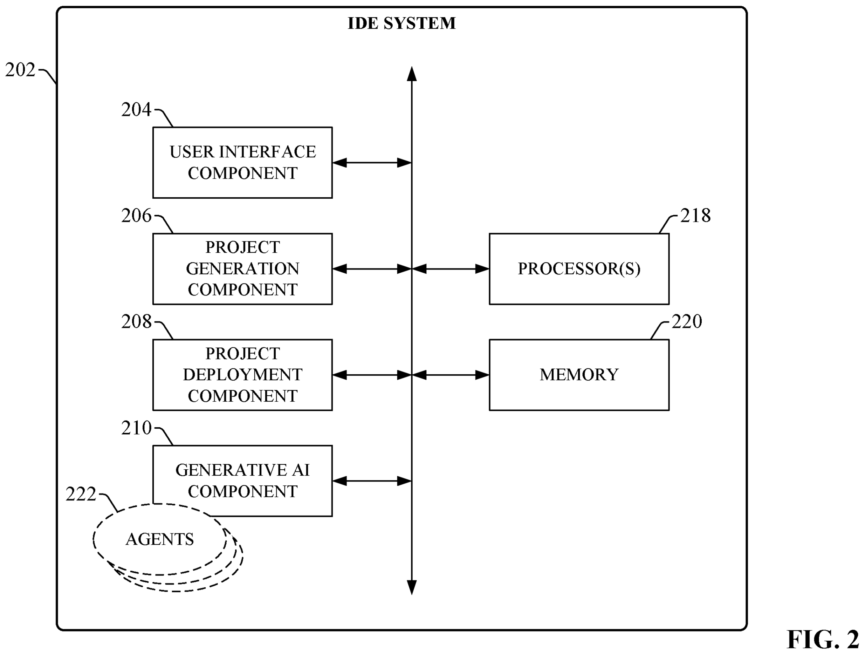

FIG. 2 is a block diagram of an example integrated development environment (IDE) system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

IDE system 202 can include a user interface component 204, a project generation component 206, a project deployment component 208, a generative AI component 210, a project testing component 212, one or more processors 218, and memory 220. In various embodiments, one or more of the user interface component 204, project generation component 206, project deployment component 208, generative AI component 210, project testing component 212, the one or more processors 218, and memory 220 can be electrically and/or communicatively coupled to one another to perform one or more of the functions of the IDE system 202. In some embodiments, components 204, 206, 208, 210, and 212 can comprise software instructions stored on memory 220 and executed by processor(s) 218. IDE system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

User interface component 204 can be configured to receive user input and to render output to the user in any suitable format (e.g., visual, audio, tactile, etc.). In some embodiments, user interface component 204 can be configured to generate and serve interface displays to a client device (e.g., a laptop computer, tablet computer, smart phone, etc.), and exchange data via these interface displays. Input data that can be received via various embodiments of user interface component 204 can include, but is not limited to, natural language chat input or prompts (submitted as text or speech inputs), control programming in a text-based or graphical format, industrial design specifications or goals submitted in various formats (e.g., natural language text or vocal input etc.), design artifacts (e.g., functional specification documents, engineering drawings, spreadsheets containing engineering information such as control I/O information, etc.), or other such input. Output data rendered by various embodiments of user interface component 204 can include text-based or spoken natural language responses to chat input or prompts, industrial control code or control code comments, answers to user-submitted questions or requests, programming suggestions, diagrams or flowcharts, or other such outputs.

Project generation component 206 can be configured to create a system project comprising one or more project files based on design input received via the user interface component 204, assisted by various types of specialized design agents 222. The project files include at least industrial control code that, when executed on an industrial controller 118, facilitate monitoring and controlling an industrial automation system in accordance with the control routines defined by the control code. The project files may also include visualization applications that can be executed on HMI terminals 114 and used to visualize operational and status information for the industrial automation system during runtime Project deployment component 208 can be configured to commission the system project created by the project generation component 206 to appropriate industrial devices (e.g., industrial controllers 118 or another type of industrial device capable of executing the control code, etc.) for execution.

Generative AI component 210 can be configured to assist the project generation component 206 in generating or analyzing portions of the system project - including generating industrial control code, visualization applications, device configuration settings, etc. - using generative AI-capable project development agents 222.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

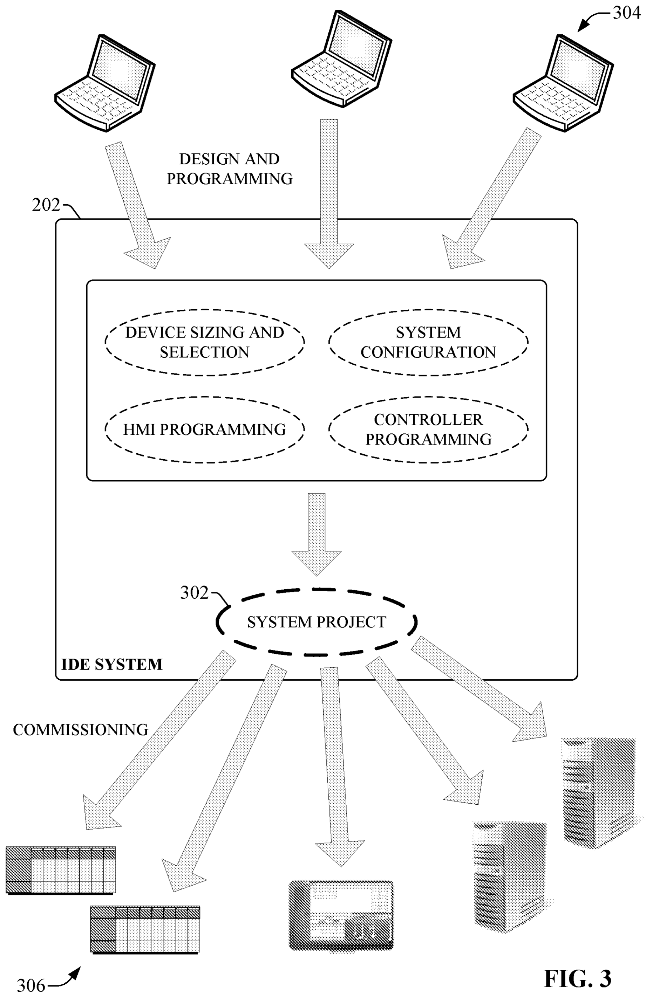

FIG. 3 is a diagram illustrating a generalized architecture of the industrial IDE system 202 according to one or more embodiments. Industrial IDE system 202 can implement a common set of services and workflows spanning design, commissioning, operation, and/or maintenance. In terms of design, the IDE system 202 can support such development functions as industrial controller programming and HMI development, sizing and selection of system components, device/system configuration, AR/VR visualizations, and other features. The IDE system 202 can also include tools that simplify and automate commissioning of the resulting project and assist with subsequent administration of the deployed system during runtime.

Embodiments of the IDE system 202 that are implemented on a cloud platform also facilitate collaborative project development whereby multiple developers 304 contribute design and programming input to a common automation system project 302. Collaborative tools supported by the IDE system 202 can manage design contributions from the multiple contributors and perform version control of the aggregate system project 302 to ensure project consistency.

Based on design and programming input from one or more developers 304, IDE system 202 generates a system project 302 comprising one or more project files. The system project 302 encodes one or more of control programming; HMI, AR, and/or VR visualizations; device or sub-system configuration data (e.g., motor drive parameters, vision system configurations, telemetry device parameters, safety zone definitions, etc.); or other such aspects of a control project being designed for an industrial automation system. IDE system 202 can translate the system project 302 to one or more executable files that can be executed on their corresponding target devices 306, and deploy the executable files to their corresponding target devices 306 for execution, thereby commissioning the system project 302 to the plant floor for implementation of the automation project.

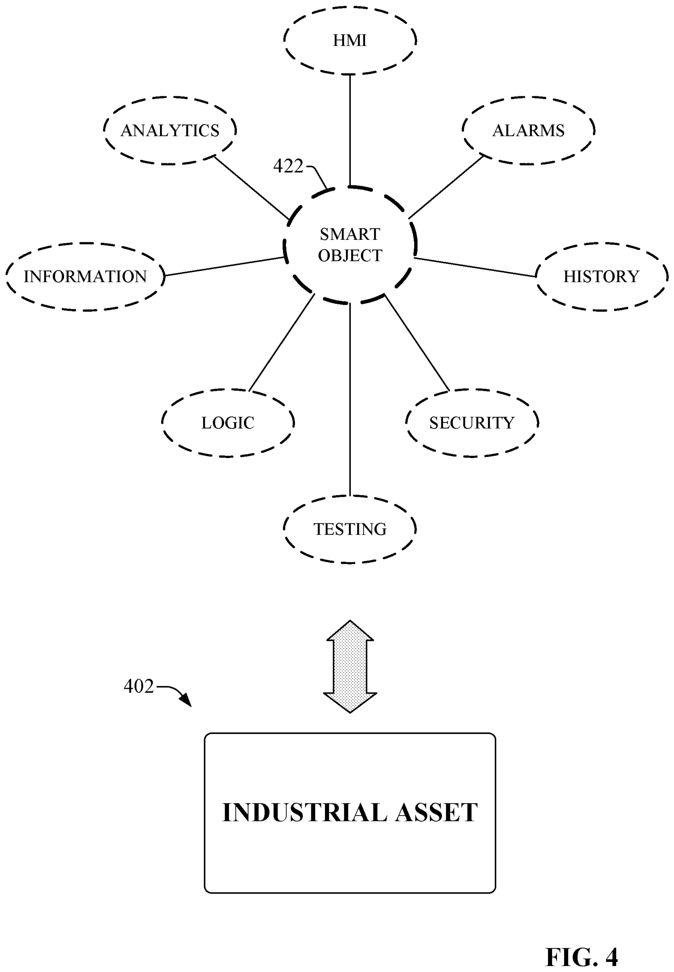

To support enhanced development capabilities, some embodiments of IDE system 202 can be built on an object-based data model rather than a tag-based architecture. Smart objects serve as the building block for this object-based development architecture. FIG. 4 is a diagram illustrating several example smart object properties that can be leveraged by the IDE system 202 in connection with building, deploying, and executing a system project 302. Smart objects 422 can be created and augmented during design, integrated into larger data models, and consumed during runtime. These smart objects 422 provide a common data structure across the IDE system 202 and can be stored in an object library (e.g., part of memory 220) for reuse. The object library can store predefined smart objects 422 representing various classifications of real-world industrial assets 402, including but not limited to pumps, tanks, values, motors, motor drives (e.g., variable frequency drives), industrial robots, actuators (e.g., pneumatic or hydraulic actuators), or other such assets. Smart objects 422 can represent elements at substantially any level of an industrial enterprise, including individual devices, machines made up of many industrial devices and components (some of which may be associated with their own smart objects 422), and entire production lines or process control systems.

A smart object 422 for a given type of industrial asset can encode such aspects as 2D or 3D visualizations, alarms, control coding (e.g., logic or other type of control programming), analytics, startup procedures, testing protocols and scripts, validation reports, simulations, schematics, security protocols, and other such properties associated with the industrial asset 402 represented by the object 422. Smart objects 422 can also be geotagged with location information identifying the location of the associated asset. During runtime of the system project 302, the smart object 422 corresponding to a given real-world asset 402 can also record status or operational history data for the asset. In general, smart objects 422 serve as programmatic representations of their corresponding industrial assets 402, and can be incorporated into a system project 302 as elements of control code, a 2D or 3D visualization, a knowledgebase or maintenance guidance system for the industrial assets, or other such aspects.

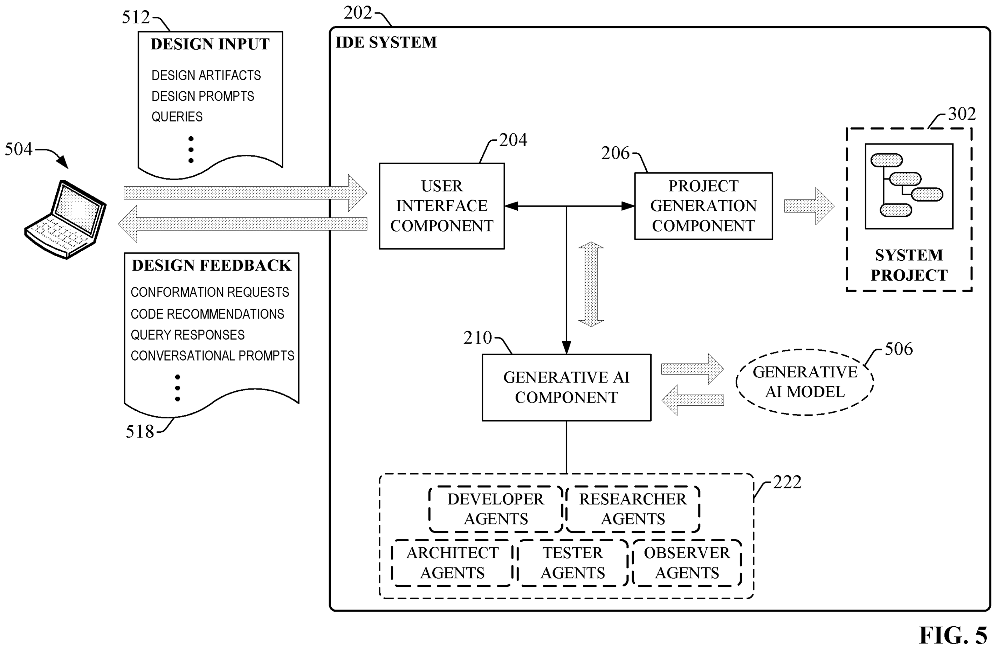

FIG. 5 is a diagram illustrating example data flows associated with creation of a system project 302 for an automation system being designed using IDE system 202 according to one or more embodiments. Some embodiments of the IDE system 202 can be implemented on a cloud platform and made accessible to multiple industrial customers having authorized access to use the IDE system's services. Cloud-based implementations can also facilitate collaborative project development whereby multiple developers contribute design and programming input to a common automation system project. Alternatively, some embodiments of IDE system 202 may execute at least partially on a local client device while accessing remote services and repositories as needed.

A client device 504 (e.g., a laptop computer, tablet computer, desktop computer, mobile device, wearable AR/VR appliance, etc.) owned by a user with suitable authentication credentials can access the IDE system's project development tools and leverage these tools to create a system project 302 - including industrial control code, device configuration settings, or other such aspects of an industrial control project - for an automation system being developed. Through interaction with development interfaces generated by the system's user interface component 204 (examples of which will be described herein), developers can submit design input 512 to the IDE system 202 in various supported formats. Design input 512 can include explicit control programming entered by the user in a text-based or graphical format (e.g., ladder logic, structured text, sequential function charts, a domain-specific language, etc.) as well as device configuration parameter definitions to be downloaded to a corresponding device, such as an industrial controller 118.

Additionally or alternatively, users can submit, as part of design input 512, design documents (also referred to as design artifacts) that were generated by the automation system designers in connection with designing the automation system for which the system project 302 is to be developed. This design documentation can include, but is not limited to, text-based functional specification documents, engineering drawings (e.g., mechanical drawings, electrical drawings including controller I/O drawings, network drawings, etc.), spreadsheets containing I/O or networking information, or other such engineering documents. As will be described below, the IDE system 202 can apply AI-enabled development agents 222 to these documents to learn the monitoring and control requirements for the automation system described by the design artifacts and formulate a strategy for building a suitable system project 302 for monitoring and controlling the automation system.

The IDE system's development services can include a project analysis and generation copilot that leverages AI-capable project development agents 222 to assist the user in building aspects of the system project 302 from submitted design artifacts and the user's natural language design prompts, as well as to search for answers to specific questions relating to the project 302 or its development. The copilot can include a generative AI component 210 that responds to natural language prompts submitted by the user as part of design input 512. These prompts can comprise, for example, descriptions of functional requirements of the system project 302 being developed, questions about the project 302 or about the development tools supported by the IDE system 202, requests for programming recommendations, questions regarding programming instructions that are available to solve a specified development problem, or other such prompts. Depending on the nature of the prompt, the generative AI component 210 can generate project development recommendations for consideration by the developer, answers to questions about the control code or about programming tools that are available as part of the IDE system's development platform, or other such content designed to assist the user in developing a system project 302 or learning about a project 302 in development.

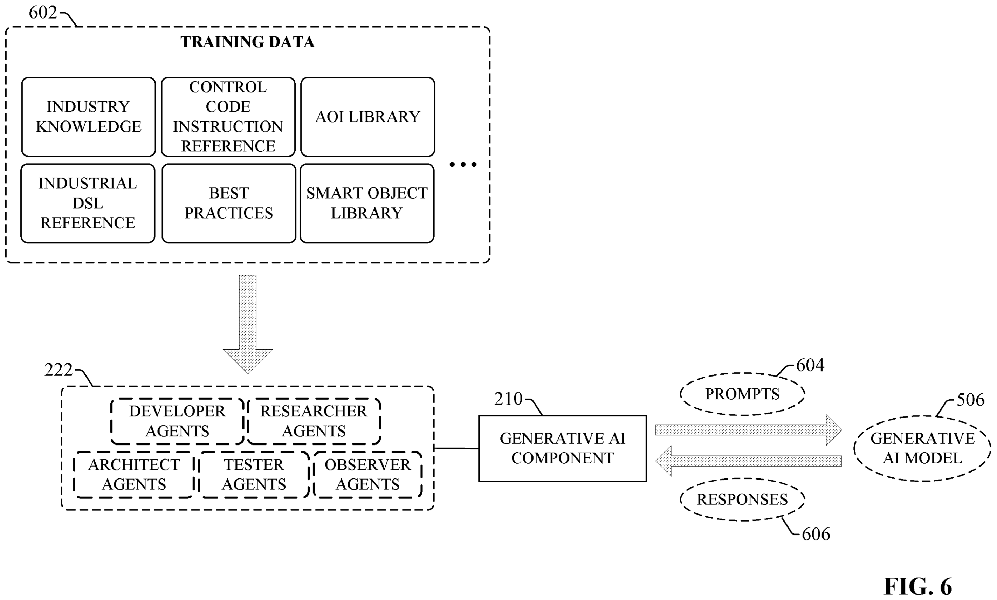

To assist with planning and building a suitable system project 302 for an industrial automation system, the generative AI component 210 uses AI-enabled project development agents 222 trained with domain-specific industrial training data. Each agent 222 is designed to perform a specific task within the project development cycle, and can include, but are not limited to, architect agents, observer agents, researcher agents, developer agents, and tester agents (the functions of which will be described in more detail below). Agents 222 can coordinate with each other to execute the exploring, planning, and building stages of the development cycle, and can also, as needed, interface with a generative AI model 506 (e.g., an LLM or another type of model) and associated neural networks. FIG. 6 is a diagram illustrating training of the agents 222 used by the generative AI component 210 and project generation component 206. In some embodiments, the generative AI model 506 can reside and execute externally from the IDE system 202, and the generative AI component 210 can include suitable connectivity tools and protocols, application programming interfaces (APIs), or other such services that allow the generative AI component 210 to exchange prompts and responses with the generative AI model 506.

Agents 222 can be trained using sets of training data 602 representing a range of domain-specific industrial knowledge. Example training data 602 that can be used to train the agents 22 includes, but is not limited to, libraries of control code instructions or add-on instructions (AOIs) that encode control or computational functionality and that can be added as elements to control routines, libraries of control code samples or smart objects that encapsulate reusable control code, libraries of user-defined data types (UDTs), libraries of product manuals for various types of industrial devices or software platforms (including programming or instruction manuals for the IDE system's control code development platform, as well as vendor-specific device manuals), help files, vendor knowledgebases, training materials, information defining industrial standards (e.g., global or vertical-specific safety standards, food and drug standards, design standards such as the ISA-88 standard, etc.), technical specifics or design standards for various types of industrial control applications (e.g., batch control processes, die casting, valve control, agitator control, etc.), knowledge of specific industrial verticals, knowledge of industrial best practices, control design rules, industrial domain-specific language (DSL) syntax data, and other such training data. As an alternative to training the agents 222 using training data 602, some or all of the training data 602 can reside in associated repositories (e.g., with the IDE system 202 itself or in external repositories) and can be accessed by the agents 222 (e.g., the researcher agent 222c described below) as needed in connection with analyzing design documents, planning a project development strategy, and building the project 302 in accordance with the strategy.

During the project development process, the agents 222 can formulate and submit prompts 604 to the generative AI model 506 designed to obtain responses 606 that assist the agents with control project development tasks. These prompts 604 are generated based on design documentation and natural language inputs submitted by the user, specific tasks being performed by the agents 222, and the industry knowledge and reference information encoded in the training data 602.

Returning to FIG. 5, based on the user's design input 512, user interface component 204 can render design feedback 518 designed to assist the developer in connection with developing a system project 302. At least some of this design feedback can comprise natural language chat prompts generated by the development agents 222 requesting specific items of information from the user (e.g., as part of an iterative dialogue with the user intended to ascertain the user's design requirements), recommendations for control code or other project elements that satisfies the user's design requirements, responses to questions submitted by the user about the system project 302 or the IDE system's programming tools, or other such feedback.

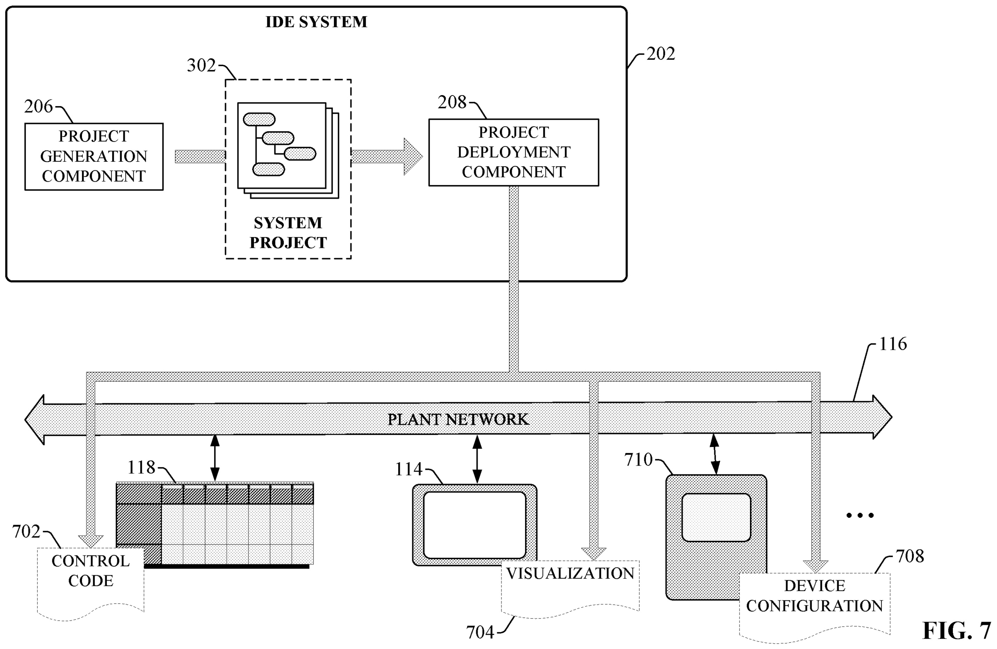

When a fully developed system project 302 for an automation system has been completed, the system project 302 can be deployed to one or more target control devices for execution. FIG. 7 is a diagram illustrating commissioning of a system project 302. Project deployment component 208 can compile or otherwise translate a completed system project 302 into one or more executable files or configuration files that can be stored and executed on respective target industrial devices of the automation system (e.g., industrial controllers 118, HMI terminals 114 or other types of visualization systems, motor drives 710, telemetry devices, vision systems, safety relays, etc.).

For example, system project 302 may comprise one or more of control code, visualization screen definitions, motor drive parameter definitions, or other such control project elements. Upon completion of project development, a user can identify which target devices- including an industrial controller 118, an HMI terminal 114, and a motor drive 710 - are to execute or receive these respective aspects of the system project 302. Project deployment component 208 can then translate controller code defined by the system project 302 to a control program file 702 formatted for execution on the specified industrial controller 118 and send this control program file 702 to the controller 118 (e.g., via plant network 116). Similarly, project deployment component 208 can translate the visualization definitions or motor drive parameter definitions to a visualization application 704 or a device configuration file 708, respectively, and deploy these files to their respective target devices for execution and/or device configuration.

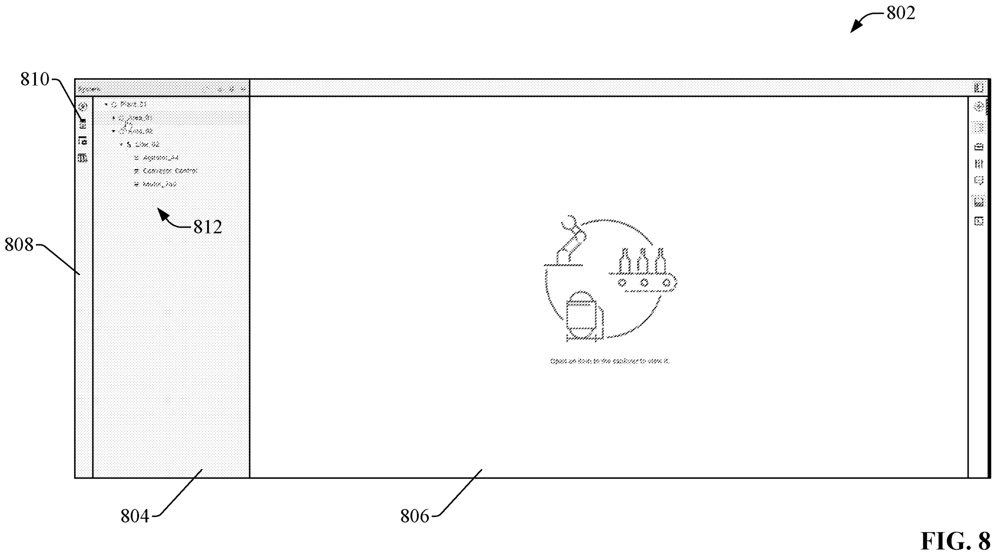

FIG. 8 is an example project development interface 802 that can be rendered by one or more embodiments of the industrial IDE system's user interface component 204. Specifically, development interface 802 depicts an example interface 802 for viewing, creating, or modifying control logic for execution on an industrial controller 118. It is to be appreciated, however, that the development interfaces 802 generated by the user interface component 204 can take other forms and will depend on the type of system project element being viewed (e.g., control code, HMI visualization, device configuration information, etc.). In some embodiments, rather than rendering the elements of the system project 302 in a design view that allows the user to directly view and edit the project elements (e.g., control code or other elements), the development interface 802 may abstract the program-level details of the system project 302 from the user and instead convey the project details to the user in other formats (e.g., natural language descriptions or high-level graphical representations) while the development agents 222 formulate and develop the underlying details of the system project 302.

The example development interface 802 depicted in FIG. 8 is organized into panels and workspaces and includes interactive development tools that assist a user in developing control system projects 302, including industrial control code to be executed on one or more industrial controllers. The example development interface 802 comprises a workspace canvas 806 and an explorer panel 804 pinned to the left of the workspace canvas 806. Explorer panel 804 serves as a means for navigating and viewing content of a control project 802. The Explorer panel 804 itself supports different viewing categories, which are represented by selectable explorer icons 810 rendered on an explorer view control bar 808 pinned to the left-side edge of the Explorer panel 804. Selection of an explorer icon 810 determines one or both of the type of project content to be browsed via the Explorer panel 804 or a format in which the browsable project content is rendered on the Explorer panel 804.

The explorer panel 804 displays a system view navigation tree 812 comprising hierarchical nodes representing automation systems that include one or more industrial controllers. The nodes are given user-defined names and are organized in the navigation tree 812 according to a user-defined hierarchical organizational schema to assist the user in locating a desired automation system in the tree 812. The tree 812 can include automation system nodes representing the automation systems (e.g., "Line_02"), which can be classified under one or more other hierarchical location nodes (e.g., city nodes, plant nodes, line nodes, etc.) representing the locations of the automation systems. The user can browse these various nodes to locate a desired automation system.

Selection of one of the automation system nodes of the navigation tree 812 causes content of the control project 302 associated with the corresponding automation system to be rendered in the workspace canvas 806. If content has already been created for the selected automation system - e.g., control programming, data tag definitions, controller definitions, etc. - this content will be displayed for viewing and editing in the workspace canvas 806. If new control programming is to be created for the selected automation system, the user can begin developing control logic and defining industrial controllers for the automation system via interaction with the workspace canvas 806.

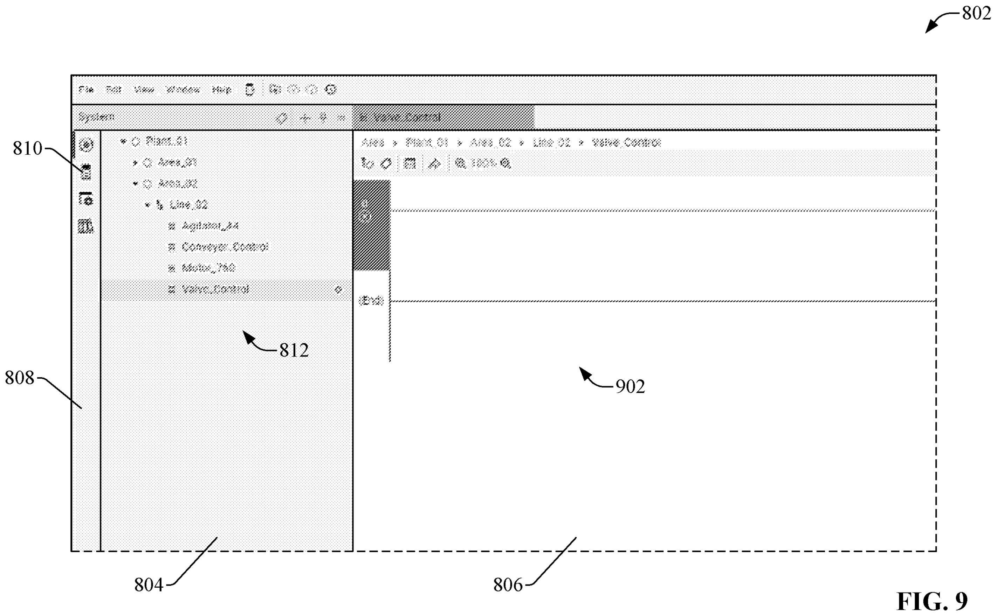

FIG. 9 is a view of the project development interface 802 in which a user has begun developing industrial control code 902 via interaction with the workspace canvas 806. According to an example workflow, the user can create a Routine node as a child of an Automation System node in the navigation tree 812. The Routine node represents a routine of a control program to be executed by a controller 118 to facilitate monitoring and control of the automation system represented by the parent Automation System node. With the Routine node selected, the user can develop control code 902 for the routine via interaction with the workspace canvas 806. The interface 802 can allow the user to selectively view and write the control program in either a text-based format or a graphical format such as ladder logic (FIG. 9 depicts a ladder logic view of a control program in progress).

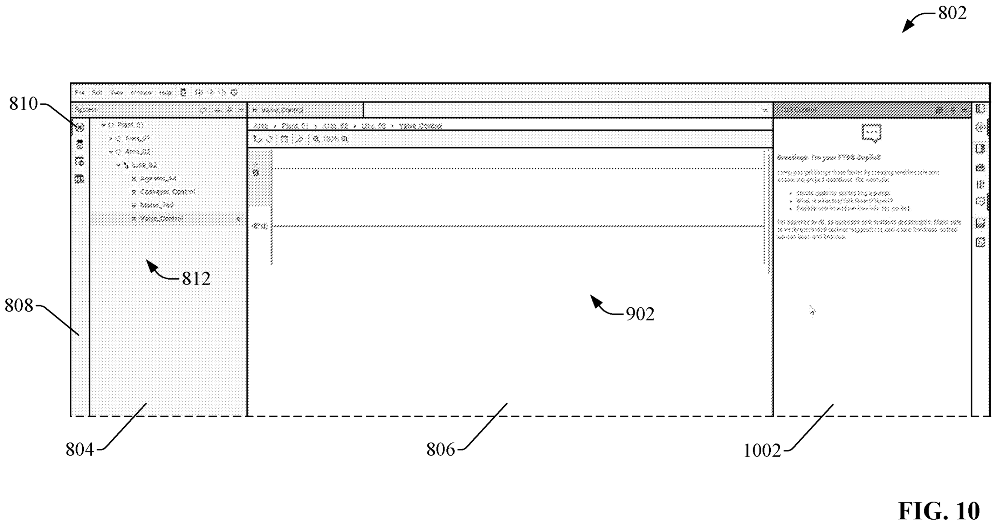

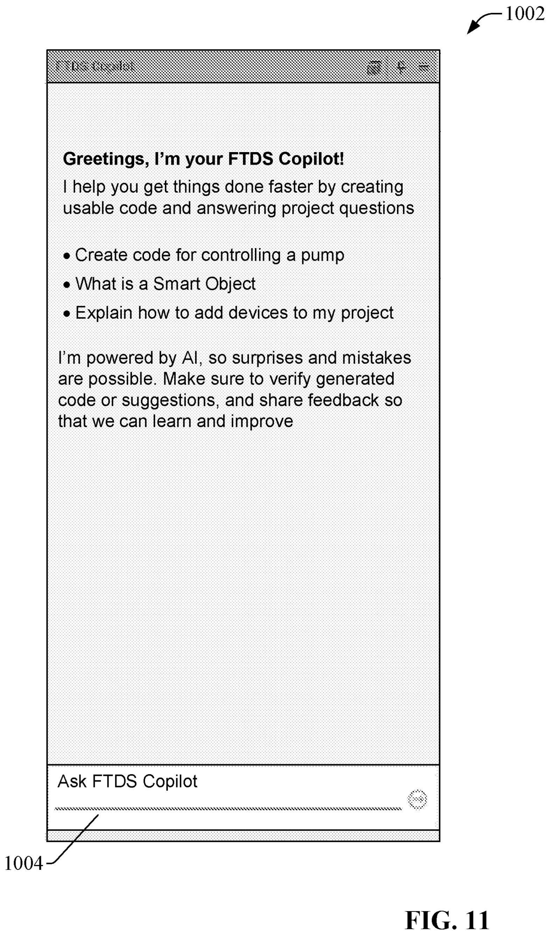

At any time during the project development process, the user can prompt the IDE system's generative AI functionality for assistance in developing the system project 302. FIG. 10 is another view of the project development interface 802 in which the user has invoked a generative AI copilot window 1002, through which the user can exchange prompts or chat conversations with the generative AI component 210 and associated development agents 222. FIG. 11 is a view of the example copilot window 1002 in isolation. In the illustrated example, the copilot window 1002 is a chat window pinned to the right of the workspace canvas 806. However, any type of generative AI interface can be used to exchange prompts with the IDE system's generative AI component 210 and its associated development agents 222. The copilot window 1002 displays a text summary explaining the types of assistance that the copilot can provide, and a data entry field 1004 in which the user can enter natural language requests or queries. While the copilot window 1002 depicted in FIG. 11 is designed to accept natural language inputs, other types of copilot windows 1002 can also allow the user to import design artifacts (e.g., natural language functional specification documents, engineering drawings, spreadsheets, etc.) into the IDE system 202 for analysis by the development agents 222.

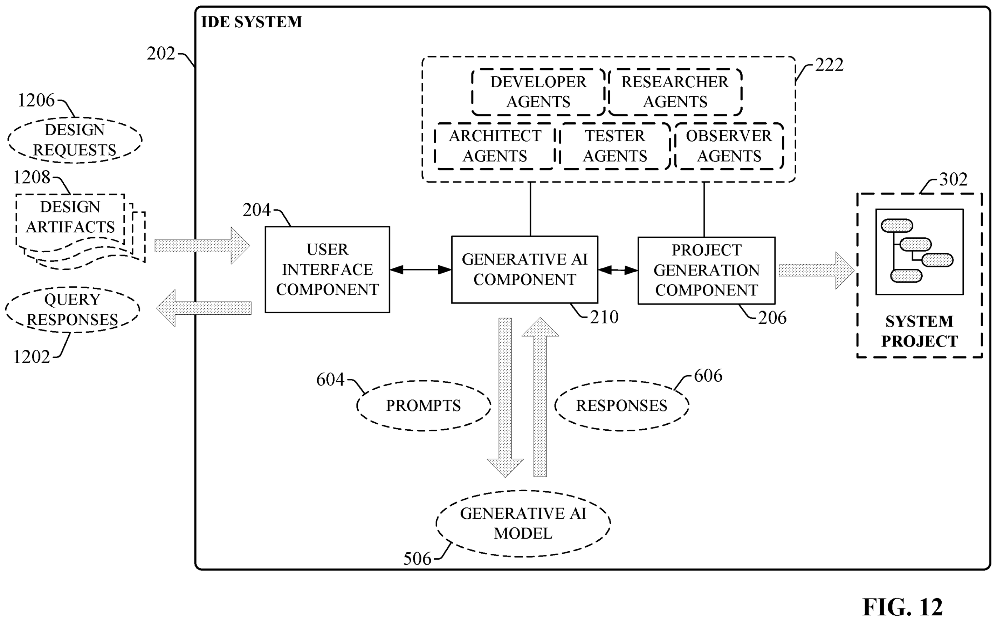

FIG. 12 is a diagram illustrating a general overview of the use of industry-specific AI-capable development agents 222 in connection with generating a system project 302, as well as generating responses 1202 to design queries submitted by a developer via the copilot window 1002. According to an example project development workflow, a user can submit, as part of design input 512, design artifacts 1208 that were developed by controls engineers in connection with designing an industrial automation system, machine, or process for which a system project 302 is now to be developed. As noted above, these artifacts 1208 may include, but are not limited to, text-based functional specification documents for a new or existing automation system for which the system project 302 (comprising one or more of control code, an HMI visualization, device configurations, or other such executable control elements) is to be developed. These functional specification documents can describe, using natural language paragraphs, charts, tables, or other such formats, functional details of the automation system or the process carried out by the automation system. The functional specification documents can be imported into the IDE system 202 in any suitable format, and may include a word processing documents, a portable document format (PDF) documents, or documents of other formats.

Design artifacts 1208 can also include engineering drawings that were developed for the automation system, such as mechanical drawings for the machines that make up the automation system, electrical drawings for the automation system (which may controller I/O drawings, power supply drawings, network drawings, or other electrical drawings), piping and instrumentation diagram (P&ID) drawings, or other such engineering drawings. Some design artifacts 1208 may also comprise spreadsheets containing relevant information about aspects of the automation system, such a listing of controller inputs and outputs (both analog and digital) expected to be used by the automation system, a list of equipment that makes up the automation system (including analog or digital input and output devices with which the controller 118 will interface), an itemization of controller data tags, or other such information. A bill of materials for the automation system can also be submitted as a design artifact 1208.

In addition to design documentation that is specific to a particular automation system, design artifacts 1208 may also include customer-specific organization-level documents describing in-house design standards or preferences that are to be applied consistently across all automation and control system designs. The IDE system 202, and in particular the development agents 222, can interpret and reference these in-house documents during system project development to ensure that all system projects 302 developed by the system202 comply with the in-house standards described in these customer-specific artifacts.

The IDE system 202 includes an agent-based processing layer in which the AI-enabled development agents 222 - which are designed to execute different specialized functions of the project development cycle - analyze the imported design artifacts 1208, as well as any natural language design requests 1206 submitted by the user, to plan and build a system project 302 for configuring, monitoring, controlling, and/or visualizing the automation system represented by the design artifacts 1208. In general, the agents 222 execute an overarching project design workflow having three main stages - exploring, planning, and building - which will be described in more detail below.

As noted above, project development agents 222 supported by the IDE system 202 are designed to carry out different specialized project design and building tasks. Specific example types of agents are now described. However, it is to be appreciated that embodiments of the IDE system 202 can support other types of project development agents 222 not described herein without departing from the scope of this disclosure.

Example project development workflows described herein utilize developer agents, researcher agents, architect agents, tester agents and observer agents. Developer agents are designed primarily to generate elements of the system project 302 itself, such as control code, HMI applications, device configuration files, or other elements of the project 302. While generating control code, the developer agent can also interact with the tester agent to validate the code against the design requirements inferred from the design artifacts 1208. If needed, the developer agent can access databases of control code snippets, add-on instructions (AOIs), program manuals for the type of controller 118 for which the control code is being generated, databases of smart objects 422, or other relevant sources of information. The developer agent can also, as needed, submit prompts 604 to the generative AI model 506 designed to obtain response 606 that can be used to assist in the generation of control code that satisfies inferred design requirements. The development agent can also process users' natural language design requests 1206 to generate control code or other project elements.

Researcher agents are designed to generate answers to questions submitted by other agents 222 or by a user in the form of a natural language query. To this end, researcher agents can read information from internal and external data sources, documents, or knowledgebases to learn answers to these questions, and formulate responses that convey these answers. The researcher agent can also, as needed, submit prompts 604 to the generative AI model 506 designed to obtain responses 606 that can assist in formulating answers to questions. In an example scenario, a researcher agent can interface with an architect agent to provide access to relevant external documents containing information that may be required by the architect agent. The researcher agent can also generate answers to natural language questions submitted by the user about the design artifacts 1208 themselves, or about the system project 302 being generated by the agents.

Architect agents are designed to generate a system design or specification that can be used as a guideline for building the system project 302. Architect agents can also support project migrations from one format to another. As needed, architect agents can submit prompts 604 to the generative AI model 506 designed to obtain responses 606 that can assist in formulating the system design specification. In an example scenario, an architect agent can interact with a researcher agent in connection with generating a system specification artifact that can be used during the build stage to create elements of the system project 302.

Tester agents are designed to validate control code (or other elements of the system project 302) generated by the developer agents against the specification created by the architect agents, and to provide feedback to the developer agent indicating portions of the control code that need to be modified, added, or removed in order to better align with the specification. As with the other agents, the tester agent can prompt the generative AI model 506 for responses 606 that can assist in validating the project 302.

Observer agents are designed to read and understand content of a system project 302, and to generate project reports describing this content. Observer agents can also assist in migration of a system project 302 from one format or platform to another.

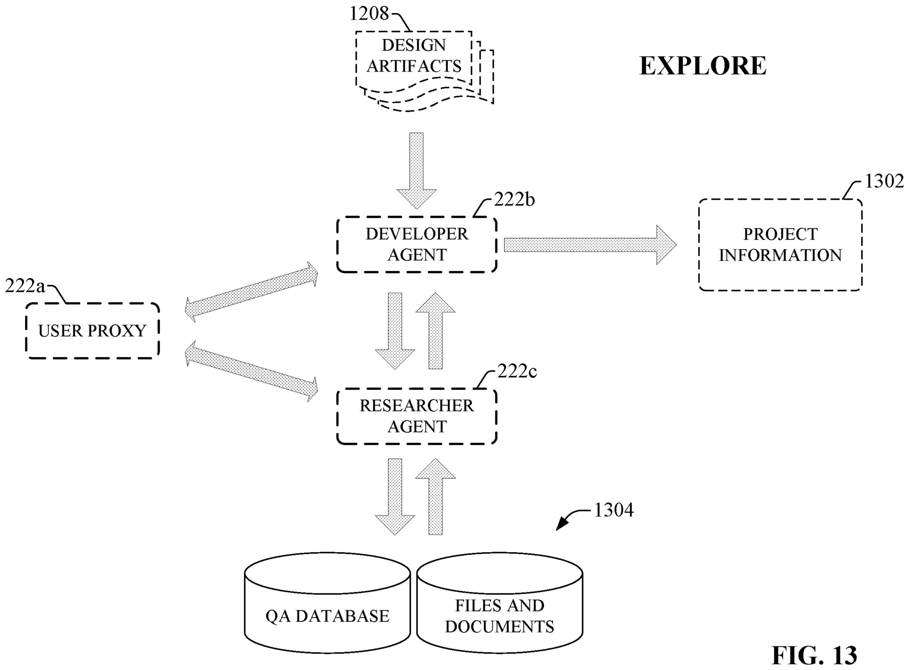

An example project development workflow that can be carried out by the development agents 222 is now described. As noted above, the agents 222 can execute an overarching project design workflow comprising explore, plan, and build stages. FIG. 13 is a diagram illustrating example interactions and outputs of the development agents 222 in connection with performing the explore stage of project development. As discussed above in connection with FIG. 12, a user can import or upload design artifacts 1208 that were generated in connection with designing an industrial automation system or process to the IDE system 202. The user can then instruct the agents 222 to assist in developing a system project 302 for monitoring and/or controlling the automation system represented by the design artifacts 1208. This system project 302 can comprise one or more of control code or logic, an HMI visualization application, device configuration settings, or other such control project elements.

After design artifacts 1208 have been submitted, the agents 222 execute an explore stage in which the agents analyze and decompose these artifacts 1208 in order to understand the design and functions of the automation system. An example explore stage can be executed by a developer agent 222b and a researcher agent 222c (whose functions were described above). The primary goal of the explore stage is to learn sufficient information about the automation system to be able to begin planning a suitable system project 302 for monitoring and controlling the automation system. For example, the developer agent 222b can analyze the design artifacts 1208 to identify devices, machines, or components of the automation system, including digital and analog input devices (e.g., proximity sensors, telemetry devices or meters, control panel input devices such as pushbuttons and selector switches, photosensors, etc.), digital and analog output devices (e.g., actuators, motor drives, indicator lights, contactors, etc.), mechanical or electro-mechanical components (e.g., conveyors, machining stations, industrial robots, tooling devices, etc.), or other such components of the automation system. The developer agent 222b can also learn or infer a type of industrial application or function that the automation system is designed to perform (e.g., sheet metal stamping for producing vehicle undercarriages, a particular type of batch process for producing pharmaceutical products or plastic materials, a die cast process for producing automotive engine blocks, a paper wrapping system that includes web tension control, etc.), including various types of product or recipes that the automation system is designed to support if appropriate.

As needed, the developer agent can interact with the researcher agent 222c to obtain supplemental information from other data sources 1304 that can assist in identifying the structure and functions of the automation system represented by the design artifacts 1208. On behalf of the developer agent 222b, the researcher agent 222c can retrieve information from local or external databases or knowledgebases determined to be relevant to the analysis being performed by the developer agent 222b. Example data sources 1304 that are accessible to the researcher agent 222c can include, but are not limited to, quality assurance (QA) databases, vendor-specific product specification documents for industrial devices or machines, local or remote help files stored in association with the IDE system 202 (including help files for the IDE system's development tools), sources of industrial design knowledge or industrial standards associated with specific industrial verticals (e.g., food and beverage, pharmaceuticals, automotive, textiles, mining, die casting, etc.), sources of information regarding industrial safety standards, or other such information sources. The researcher agent 222c can also, as needed, prompt the generative AI model 506 for responses 606 that may assist the developer agent 222b in learning about specific items of information contained in the design artifacts 1208. In some scenarios, the information searches performed by the researcher agent 222c can be driven by the needs of the developer agent 222b given a current type of analysis being performed on the design artifacts 1208, or a portion of the design artifacts 1208 being examined. The researcher agent 222c can return its discovered information to the developer agent 222b for integration into the exploration analysis.

The developer agent 222b and the researcher agent 222c can iteratively interact with one another (and with the generative AI model 506) in connection with analyzing the user's design artifacts 1208, and based on results of this agent-based exploration analysis the developer agent generates a project information document 1302 that catalogs the devices, machines, or elements of the automation system described by the artifacts 1208, as well as functional relationships between these components. The project information document 1302 also contains information regarding how configurable devices - such as motor drives, industrial controllers, telemetry devices, sensors, etc. - should be configured in order to carry out the inferred functions of the automation system. In general, during the explore stage, the developer agent 222b and researcher agent 222c learn the monitoring, control, device configuration, and visualization requirements for the automation system represented by the artifacts 1208 and documents this information in the project information document 1302.

During this initial explore stage, the agents 222 can interact with the user to confirm discoveries that were made by the agents 222 about the automation system, and refine the information encoded in the project information document 1302 based on feedback submitted by the user. For example, the developer agent 222b can render, via the user interface component 204, a summary of information about the automation system obtained via the agent-based analysis of the design artifacts 1208. This summary can include a catalog of machines or devices that make up the automation system, information about functional relationships between these machines and devices, the type of industrial application that the automation system is designed to perform, types of products or recipes the automation system is expected to produce, operating modes that the automation system should support (e.g., automatic, manual, semi-automatic, slow operating mode, product-specific operating modes, etc.), configurations of safety equipment associated with the automation system, or other such information. The IDE system 202 can ask the user to confirm the assumptions made by the agents 222 by verifying the information contained in this rendered summary. The user can correct or update the selected information contained in the project information document 1302 by submitting suitable natural language design requests 1206 describing these corrections or updates. In this way, the user can conduct an iterative natural language dialog with the IDE system 202 to refine the assumptions made by the agents 222 about the automation system and to update the project information document 1302 accordingly. Modifications or updates that can be implemented in this manner can include, but are not limited to, adding, removing, or changing a machine or device that was assumed to be part of the automation system; editing a recipe to be supported by the automation system; refining the description of a control sequence to be performed by the automation system; or other such modifications.

During this review and refinement stage, or any subsequent stage of the project development process, the IDE system 202 can, if requested, render the original design artifacts 1208 for the user's review. If desired, the user can edit any of these design artifacts 1208 through interaction with the IDE system's development interface and instruct the system 202 to update the product information document 1302 based on the edited artifacts 1208. This affords the user an opportunity to dynamically refine the original automation system design during development of the system project 302.

In this and subsequent stages of the IDE system's project development cycle, some embodiments of the IDE system 202 can also support the use of a user proxy agent 222a (also referred to as a project manager agent) that serves as a virtual stand-in for the human developer as the other agents 222 are carrying out their exploring, planning, and building functions. The user proxy agent 222a can act as a mediator between the human developer and the agents 222, and can perform such functions as receiving the design artifacts 1208 (imported by the developer via the user interface component 204) and providing the artifacts 1208 to the relevant agents 222, translating natural language design requests 1206 or queries received from the human developer into corresponding agent instructions and directing these agent instructions to one or more selected agents 222 for processing, translating information generated by the other agents 222 into human-readable information and rendering this information via the user interface component 204 (where this human-readable information can include text-based natural language responses or graphical responses such as diagrams or flowcharts), monitoring the analytic and build activities of the agents 222 to ensure that the agents are engaged in appropriate activities given the current collective function being performed, mediating between different types of agents 222 to perform a collaborative analytic or build function, answering certain types of questions generated by the agents 222 that would otherwise be directed to the human developer, or performing other such management functions.

In an example scenario, if one of the agents 222 requires additional information from the user in order to understand a portion of a design artifact 1208 or to otherwise refine the project information document 1302 for accuracy, the agent 222 can convey to the user proxy agent 222a the nature of the required information, and the user proxy agent 222a can translate this agent request to a natural language question or request, which is rendered via the user interface component 204. The user proxy agent 222a can then translate the human developer's natural language response to this question to a format understandable by the agent 222 requiring the information and provide the translated information to the agent 222. In some cases, if the user proxy agent 222a has access to, or knowledge of, the required information, the user proxy agent 222a can provide the information to the agent 222 without prompting the human user. The user proxy agent 222a can also, as needed, coordinate activities and interactions between agents 222 of various types.

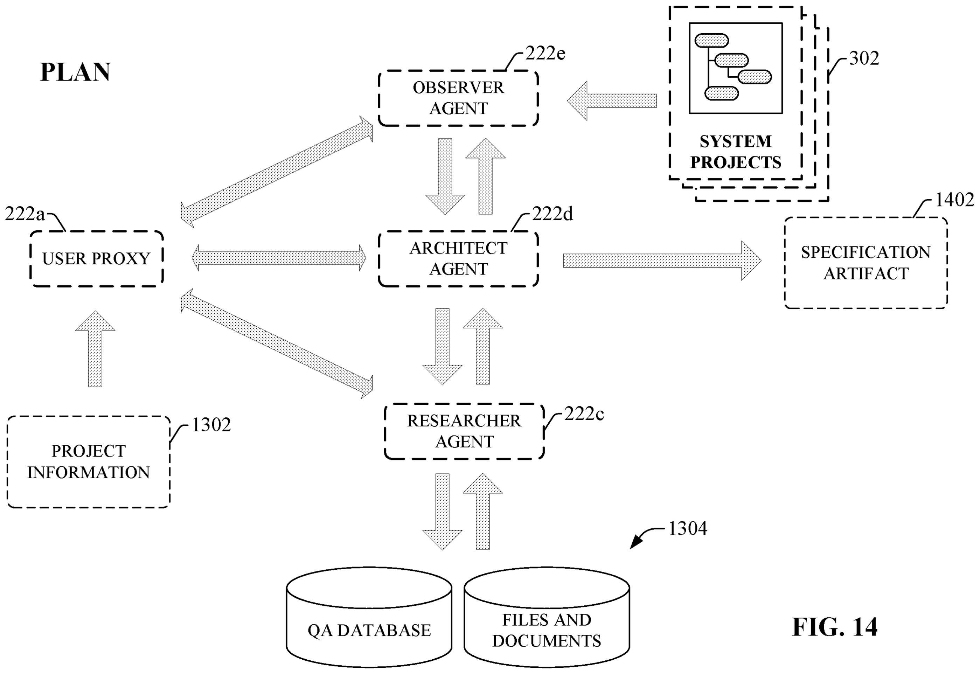

Once the agents 222 have generated a project information document 1302 whose accuracy has been verified by the human developer, the explore stage is considered complete and the plan stage is initiated. FIG. 14 is a diagram illustrating example interactions and outputs of the development agents 222 in connection with performing the plan stage of project development. During this stage, the relevant agents 222 translate the information about the automation system recorded in the project information document 1302 into a specification artifact 1402 describing a plan for creating a system project 302 for monitoring, controlling, configuring, and/or visualizing the automation system. The specification artifact 1402 represents a strategy formulated by the agents 222, based on what was learned about the automation system from the design artifacts 1208, for building a system project 302 for the automation system. In general, the agents 222 can determine project elements that will be required for the project 302, including control code routines, configurations or operating modes for devices included in the automation system's design (e.g., variable frequency drive parameter settings, device networking settings, controller configuration settings, etc.), HMI display screens for visualizing relevant operational and status information for the automation system, or other such project content. At this stage, the specification artifact 1402 identifies the necessary project elements and their functional requirements without explicitly generating the elements (e.g., control programming, HMI applications and their display screens, etc.). Instead, the specification artifact 1402 represents a design strategy - including descriptions of the project elements and their associated functions that will be required for the system project 302 - that can be used by the agents 222 as a guide for creating the project elements during the build stage.

In the example planning workflow depicted in FIG. 14, the plan stage is performed by the architect agent 222d, the researcher agent 222c, and (if appropriate) the observer agent 222e. The architect agent 222d is configured to generate the specification artifact 1402 based on analysis of the content of the project information document 1302, assisted by information obtained by the researcher agent 222c from data sources 1304 and, as needed, responses 606 prompted from the generative AI model 506 (see FIG. 12). As in the explore stage, the architect agent 222d and researcher agent 222c can communicate iteratively with one another (and with the generative AI model 506) determine the types and content of project elements required to configure, monitor, control, and visualize the automation system described by the project information document 1302.

As the architect agent 222d is analyzing the project information document 1302 to determine the monitoring and control requirements for the automation system, the architect agent 222d can, as needed, instruct the researcher agent 222c to locate and retrieve information that can be used by the architect agent 222d to ascertain a project requirement for the corresponding automation system. This information can include, for example, vendor-specific device specification data retrieved from the device vendor's website or knowledgebase, information regarding a typical control sequencing often used for a type of industrial application carried out by the automation system, typical reporting requirements for the industrial application (which may be specific to the industrial vertical in which the automation system will operate), information from help files that can be used to learn an appropriate configuration parameter setting for a device (e.g., a motor drive, a meter, a controller, etc.), or other such information.

As part of the planning analysis, the architect agent 222d can perform contextual analysis on content of the project information document 1302. This contextual analysis can infer, based on the training of the architect agent 222d (supplemented, if needed, by responses 606 prompted from the generative AI model 506 and supplemental information obtained by the researcher agent 222c) a type of industrial application that the automation system is designed to perform (e.g., a type of batch processing, web tension control, conveyor control, a die casting application, valve control, sheet metal stamping, etc.) or an industrial vertical in which the automation system will operate (e.g., food and beverage, pharmaceuticals, automotive, textiles, mining, aerospace, marine, die casting, etc.). Based on this contextual information, the architect agent 222d can include, in the specification artifact 1402, a specification that the system project 302 should include control code that executes control functionality required for the type of control application for which the automation system was designed, or that aligns with prescribed functional, safety, or programming standards defined for the industrial vertical in which the automation system will operate.

In some scenarios, the agents 222 can formulate at least some aspects of the project design plan based on existing system projects 302 for similar automation systems. These archived system projects 302 may be proprietary customer-specific projects 302 that were created for other automation systems or production lines in service within the customer's facilities, and which perform a similar function to that of the automation system for which a new system project 302 is being designed, albeit with some differences in terms of the equipment or devices used in the system design, the type of product to be manufactured, or other system aspects. The archived project 302 may also include projects developed by or for other customers and made available to the agents 222 for analysis without exposing proprietary customer-specific information that may be encoded in the projects' design or content. The observer agent 222e, which is designed to read and understand content of a system project 302, can analyze these similar system projects 302 to identify, for example, common project design aspects may be relevant to the new automation system, and provide this information to the architect agent 222d. This information obtained from existing similar system projects 302 can assist the architect agent 222d in formulating portions of the design plan for the new automation system and updating the specification artifact 1402 accordingly.

During the plan stage, the agents 222 can, either directly or via the user proxy agent 222a, interact with the human designer as needed to obtain additional information that can improve the likelihood that the project design specification will satisfy all requirements of the automation system. This may include, for example, asking the designer for machine operating preferences (e.g., a desired maximum conveyor or machine operating speed, desired operating modes, etc.), asking the designer for expectations regarding environmental conditions on the plant floor that may have an impact on the automation system's performance, asking the designer about operator preferences for the HMI design (e.g., accommodations for visual impairments, color scheme preferences, graphical object layout preferences, etc.), or prompting the designer for other such information.

In some scenarios, the architect agent 222d may determine that multiple design options are viable for a given aspect of the project design (e.g., alternative device configurations options, alternative HMI display screen layout or formatting options, optional machine operating mode features, etc.). In such cases, one or more of the agents 222 can render information about these alternative design options via the user interface component 204 (e.g., as design feedback 518; see FIG. 5) for the user's review. The user can select from among the proposed design options using a natural language response, and the agents 222 will incorporate the user's design selection into the specification artifact 1402. Prior to the user's selection, the agents 222 can also generate answers to questions the user may submit regarding the proposed alternative design options to assist the user in making an informed design selection.

The agents 222 can also answer questions submitted by the designer regarding aspects of the project design specification being created. These questions can be submitted to the system 202 as text-based or spoken natural language questions or requests for information about a specific aspect of the design plan represented by the specification artifact 1402. The agents 222 can process these questions or requests, individually or in collaboration, and formulate responses 1202 addressing the designer's questions, which are rendered via the user interface component 204. Depending on the nature of the query, these responses 1202 can take the form of text-based or spoken natural language responses, diagrams or flowcharts that convey the requested information (e.g., flowcharts depicting a control sequence that the system project 302 is programed to perform, or interlock conditions that must be true before a specified control output defined by the project 302 can be issued) The agents 222 can generate these responses 1202 based on such factors as knowledge obtained by the architect agent 222d in connection with processing the project information document 1302 and generating the specification artifact 1402, information obtained from data sources 1304 by the researcher agent 222c (either in response to the user's query or in connection with assisting the architect agent 222d), information about archived projects 302 obtained by the observer agent 222e, responses 606 prompted from the generative AI model 506, or other such information.

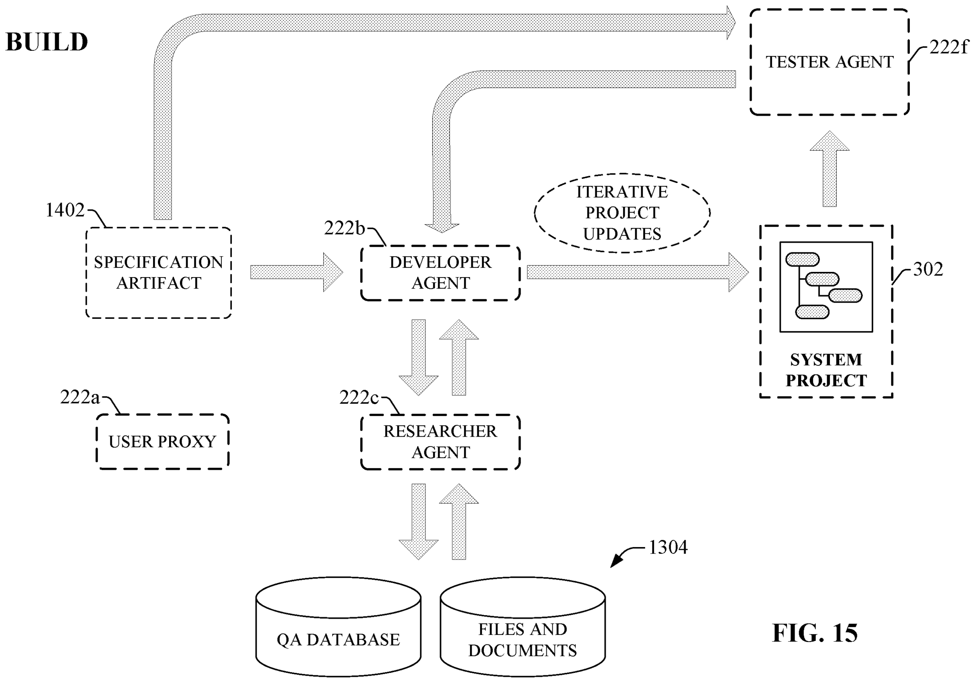

Through analysis of the project information document 1302 and iterative natural language design discussions conducted between the agents 222 and the human designer, the agents 222 gradually converge on a finalized specification artifact 1402 describing the elements required for a suitable system project 302 for the automation system. The plan stage is completed when a finalized specification artifact 1402 is generated by the agents 222 and approved by the user. The specification artifact 1402 describes a plan, formulated by the agents 222, for creating a system project 302 for monitoring, controlling, configuring, and/or visualizing the automation system. In some cases, the specification artifact 1402 can described project elements in terms of what functions or activities those elements need to perform in order to fulfill a required function of the automation system. Upon completion of the specification artifact 1402 is complete, the IDE system 202 begins the build stage of the project development workflow. FIG. 15 is a diagram illustrating example interactions and outputs of the development agents 222 in connection with performing the build stage of project development. During the build stage, the agents 222 generate the system project 302 in accordance with the design plan described by the specification artifact 1402. As in the stages described above, the agents 222 can work collaborative with one another to generate the elements of the system project 302 described by the specification artifact, develop and execute tests scripts for validating the project 302, and revising the project 302 as needed based on results of these validation tests.

In the example build workflow depicted in FIG. 15, the build stage is performed by the developer agent 222b, the researcher agent 222c, and the tester agent 222f. Based on the information contained in the specification artifact 1402, the developer agent 222b can translate the information in the specification artifact 1402 describing the necessary design elements, generate these elements as explicit components of a new system project 302. This can include generating control code in accordance with monitoring and control specifications described by the specification artifact 1402 (including building individual control code routines specified by the artifact 1402), generating an HMI application and designing its associated HMI display screens in accordance with the visualization requirements described by the specification artifact 1402, setting explicit configuration parameter values for configurable devices that are part of the automation system (e.g., motor drive parameter settings, network infrastructure device settings, controller settings, I/O module configuration parameter settings, telemetry device scale factors, etc.), or generating other such elements of the system project 302.

As needed, the developer agent 222b can request any supplemental information from the researcher agent 222c that may be useful in translating the design requirements described by the specification artifact 1402 into explicit elements of the system project 302. This supplemental information may include, for example, information obtained from a programming manual for a type of industrial controller 118 that will be executing the project's control code (e.g., information about add-on instructions supported by the controller, code formatting standards supported by the controller, programming language support, etc.), information obtained from relevant device manuals regarding configuration parameters or capabilities supported by industrial devices that make up the automation system, information regarding vertical-specific industrial standards that may dictate how control sequences should be programmed or what types of information should be archived for auditing purposes, answers to questions regarding development capabilities of the IDE system 202 itself, or other such supplemental information.

For system projects 302 that include control code to be executed on an industrial controller 118, the tester agent 222f can validate the control code generated by the developer agent 222b to ensure that the code aligns with the design requirements described in the specification artifact 1402. In some scenarios, the tester agent 222f can formulate and generate test scripts designed to determine whether selected portions of the control code perform as required by the specification artifact 1402, and execute these test scripts against the selected portions of the control code. An example test script can define one or more test scenarios that may be run against a specific portion of the system project 302 (e.g., a line or section of control code, a smart object or groups of inter-related smart objects or control routines, etc.). The tester agent 222f can design the test scenarios encoded int the tests scripts based on industrial expertise regarding the control functions being tested or the type of industrial applications for which the system project 302 is being developed. As needed, the tester agent 222f can instruct the researcher agent 222c to find and retrieve supplemental information from data sources 1304 that can be used by the tester agent 222f to design the test scenarios and generate corresponding test scripts. The resulting test scripts can be used to verify proper operation of the control code portions to which the scripts are directed (e.g., by simulating test inputs into the code portion being tested and verifying that the code portion response as expected to the simulated inputs) as well as verify that the code portions behave as required by the specification artifact 1402, thereby validating those portions of the system project 302. Other approaches for validating the control code generated by the developer agent 222b are also within the scope of one or more embodiments of the tester agent 222f.

If the test scripts executed by the tester agent 222f determine that a portion of the code does not satisfy the requirements set forth in the specification artifact 1402, the tester agent 222f reports this issue to the developer agent 222b, which then updates the relevant portion of the code (and any other code portions that may need to be updated to accommodate the change) to bring the code portion into alignment with the specification artifact 1402. This testing and revision sequence can be performed iteratively by the developer agent 222b and researcher agent 222c - and can leverage additional information obtained by the researcher agent 222c or the generative AI model 506 as needed - until finalized control code that satisfies all functional requirements described in the specification artifact 1402 is obtained.

In contrast to time-consuming serial creation of project elements, such as automation objects, HMI graphical objects, or control code routines, the agents 222 can leverage bulk creation of similar elements to be included in the project 302. For example, if an HMI display screen requires multiple animated graphical objects representing pumps, the developer agent 222b can create and configure these graphical objects (including setting those objects' animation properties and links to controller data tag whose values will set the animation property values) substantially simultaneously

The iterative project building process performed by the agents 222 can also be guided or influenced by feedback from the human developer. For example, as in the plan stage, the agents 222 may, at certain points in the iterative development process, present the user with information describing alternative design options for a portion of the project (e.g., HMI display screen format options, alternative sensing or metering options, alternative control code architectures, etc.) and update the project 302 based on the user's selection from among the presented options. The agents 222 may also ask the human developer how the automation system should behave in response to a condition or scenario that the agents 222 predict may occur during operation, and update the system project 302 based on the developer's response, which may be submitted in the form of a natural language design request 1206 describing the desired machine behavior. The user can also, at any point during the build stage, submit free form natural language design requests 1206 describing programming or visualization preferences. The agents 222 can translate these natural language design requests 1206 into project edits which are then implemented in the system project 302 (and tested by the tester agent 222f if necessary).

The developer agent 222b can also generate and embed natural language documentation or comments within the generated control code. This embedded documentation can include, for example, natural language descriptions of the functions of respective portions of the control code (e.g., ladder logic rung comments, comment lines included in the text-based view of the code, etc.), names of variables used in the control code (e.g., a description of the variable's function, or the metric represented by the variable's value), instructions for using the code, or other such documentation. In some cases, the developer agent 222b can generate at least some of the embedded documentation based on natural language functional descriptions or nomenclature obtained from the original design artifacts 1208 (e.g., names of input or output devices obtained from I/O drawings, functional descriptions obtained from a functional specification document for the automation system, etc.). The developer agent 222b can also generate portions of this program documentation based in part on information retrieved by the researcher agent 222c from data sources 1304 (e.g., pre-written documented control code samples, device documentation, standards documentation, training data 602, etc.) as well as program documentation text generated by the generative AI model 506 in response to prompts 604 submitted by the agents 222.

In connection with any of the explore, plan, and build stages discussed above, one or more of the agents 222 can be configured to enact certain actions in response to a defined workflow trigger. These workflow triggers can be defined in terms of design actions or events that, when detected by one or more relevant agents 222, cause those agents 222 to perform a related action intended to assist with those detected design actions. For example, in a scenario in which the human developer is submitting design inputs 512 directed to the system project 302 under development, the developer agent 222b can monitor the user's design inputs 512 and detect that the user has added and configured three smart objects 422 representing motors to the system project 302. In response to detecting these design inputs 512, the developer agent 222b can ask the user if the agent 222b should automatically add and configure additional motor smart objects 422 to the project 302. The developer agent 22b can infer, based on its existing knowledge of the project 302 or information contained in the specification artifact 1402, the total number of such smart objects 422 that should be added to the project 302, as well as the configurations of those smart objects 422. Upon receiving confirmation from the user, the developer agent 222b can proceed to add the suggested number of smart objects 422 to the project 302.

The agents 222 can be configured to detect substantially any type of design trigger or event and to execute corresponding actions based on detection of these triggers. In some cases, the agents 222 can be configured with rules that explicitly specify the design trigger that is to execute a corresponding action (also defined explicitly by the rules). In addition or alternatively, the agents 222 can be configured to learn patterns of design activity by monitoring the design activities performed by the user or by other agents 222 over time, and automatically define triggers and corresponding design actions based on these learned patterns. For example, one or more of the agents 222 may learn, based on monitoring of user design actions over time, that a user typically configures the parameters of a particular type of smart object 422 in a consistent manner after adding an instance of the smart object to a project 302. Based on this observation, the agents 222 may prompt the user to ask if this smart object configuration should be used whenever an instance of the smart object type is added to a project 302. If the user approves this automated action, the agents 222 will create or update a trigger rule to define that this configuration action will be automatically applied by the agents 222 in response to detecting that an instance of the smart object 422 has been added. In general, an agent 222 can, in response to recognizing that a first design action (e.g., addition of an instance of a smart object type to a project 302) is typically followed by a second design action (e.g., applying a same configuration to the smart object instance), update its trigger rule to automatically perform the second design action in response to detecting the first design action.

Other automated design actions or workflows that can be executed by the agents 222 in response to a defined trigger even can include, but are not limited to, retrieval of a type of information by the researcher agent 222c, creation or configuration of a project element by the developer agent 222b (e.g., a control routine having a specific structure, an HMI display having a defined layout of graphical objects, setting a device configuration parameter to be a specific value, etc.), creation of a test script by the tester agent 222f, implementing a specific type of update to the design plan recorded in the specification artifact 1402 by the architect agent 222d, implementing a specific type of update to the project information document 1302 by the developer agent 222b, formulating and submitting a specific type of prompt 604 to the generative AI model 506, or other such actions.

In some embodiments, the agents 222 can maintain different workflow trigger rules for respective different human users, such that the rules associated with a given user are based on that user's learned patterns of design activity. The agents 222 will only apply the trigger rules associated with a given user to design sessions carried out by that user.

In addition to learning users' patterns of design behaviors, some agents 222 can also learn behavior patterns of other agents 222 in the course of performing any of the explore, plan, and build stages. Based on these learned patterns, an agent 222 can define trigger rules for automatically executing an action (consistent with the functional role of that agent 222) in response to detecting a particular action performed by another agent 222. This can include, for example, obtaining a particular set of information from the data sources 1304 or the generative AI model 506 by the researcher agent 222c and providing this information to the developer agent 222b or architect agent 222d at particular stages of the planning or building workflows, formulating a test script by the tester agent 222f in response to a type of edit being performed on the system project 302 by the developer agent 222b, or other such agent-based actions.

In addition to event-based triggering of agent actions, some agents 222 may also be configured to perform actions on a scheduled or cyclical basis, including any of the example event-triggered actions described above.

The generative AI backend of the IDE system 202 - which can include the agents 222 themselves, the generative AI model 506, and associated processing components or neural networks - has the ability to interact with human users (e.g., through the copilot window 1002 or another type of text-based or verbal interface) as well as the IDE system's backend files. In some embodiments, the AI backend can also influence areas of the project development user interfaces generated by the user interface component 204. For example, any of the agents 222 or other components of the generative AI backend can alter the state of the user interface as needed through interaction with the user interface's application shell (or app shell). Example user interface actions that can be initiated by the generative AI backend via interaction with the app shell can include, but are not limited to, opening user interface panels, opening or transitioning between user interface tabs, changing the color scheme or theme of the user interface, initiating code commit actions, or other such functions. Some of these actions can be initiated in response to requests submitted by the user, as in scenarios in which the user submits a natural language request to the system 202 to display a specified feature of the system project 302 (e.g., a request to view a control routine that performs a specified control function, a request to view configuration information for a data tag stored in the project's tag database, etc.) or to explain a feature of the system project 302 that requires navigation to a different screen or panel of the user interface. The agents 222 can also alter the state of the user interface as needed. In general, the generative AI backend has the same ability to control the IDE system's frontend user interfaces as the user, and also has awareness of the current state of the user interface so that the generative AI backend is aware of that the user is currently viewing.

The user interface app framework, or app shell, provides an action service that is used to facilitate communication between extensions as well as extensions to the app shell itself. Substantially any piece of frontend code can be executed during an action. During initialization, the frontend can send a list of available user interface actions to the generative AI backend. These actions typically use descriptive identifiers to explain their capabilities (e.g., OpenTagEditor for an action that opens a tag editor interface, ChangeUITheme for an action that changes the theme or color scheme for a user interface, etc.). The generative AI backend can then reference these action identifiers in its instructions to the frontend to control the state of the IDE system's user interface as needed. Any of the agents 222 discussed herein can, as needed, control the state of the user interface in this manner; e.g., if an agent 222 determines that an alteration of the user interface's state is necessary in connection with assessing the design artifacts 1208 or generating the system project 302.

Once the agents 222 have completed work on a system project 302 that satisfies the requirements defined by the specification artifact 1402 and that has been approved by the human developer, the completed system project 302 can be deployed to the relevant control, visualization, or monitoring devices for execution as described above in connection with FIG. 7.

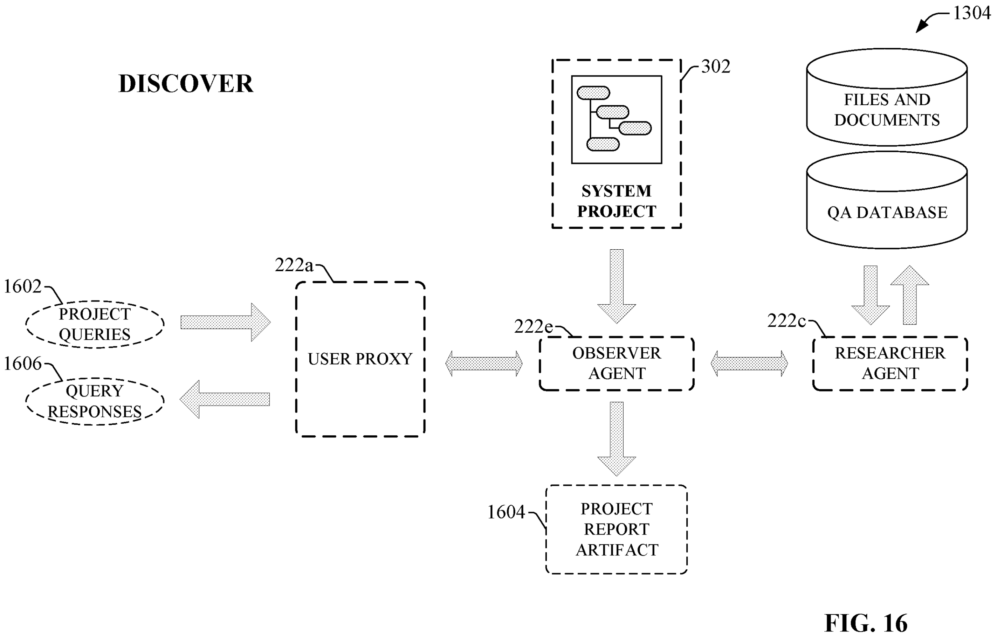

Observer agents 222e are capable of explaining and summarizing completed system projects 302. FIG. 16 illustrates example agent interactions associated with a discover stage, in which an observer agent 222e answers a user's questions about a project 302 or generates summary information for the project 302. If requested, the observer agent 222e can analyze the content of a system project 302 and generate a project report artifact 1604 containing an information summary of the project 302. Information that can be included in the project report artifact 1604 can include, but is not limited to, a catalog of industrial devices that make up the control system on which the project 302 will execute (e.g., controllers and their associated I/O modules, motor drives, digital and analog input and output devices, telemetry devices, sensors, etc.), natural language descriptions of the industrial application carried out by the associated automation system, types or models of products manufactured by the automation system, recipes supported by the automation system, expected energy consumption or emission statistics for the automation system, predicted cycle time information for the automation system, a tag count for the project 302, or other such information. The project report artifact 1604 can be stored for reference purposes or viewed and browsed via the user interface component 204.

Additionally, the observer agent 222e can formulate answers to specific queries 1602 about the project 302 submitted by the user (which may be submitted via the user proxy agent 222a in some embodiments). The observer agent 222e generates responses 1606 to such queries 1602 based on analysis of the content of the project 302 and, as appropriate, knowledge encoded in the training data 602 (see FIG. 6), responses 606 prompted from the generative AI model 506, or supplemental information obtained from data sources 1304 by the researcher agent 222c. Queries 1602 that can be processed by the observer agent 222e in this manner can include, for example, questions regarding the numbers and types of devices used by the control system on which the project 302 will execute (e.g., "How many digital I/O modules are in this project?"), questions regarding control sequences or control interlocks defined in the project's control code (e.g., "What conditions have to be true to allow Conveyor 1 to run?", "What does the Separator routine do?", etc.), questions about cycle times associated with respective portions of the machine or production line that will be monitored and controlled by the system project 302, or other such queries.

The agent-based generative AI-enabled industrial IDE system 202 described herein simplifies the method by which industrial control code is written, configured, optimized, and documented. The use of role-specific AI-enabled agents 222 to intelligently generate a control project 302 through analysis of design artifacts 1208 eliminates the need for the user to understand the nuances of control programming and HMI development, while also allowing the user to guide the project development process using natural language design prompts and requests.

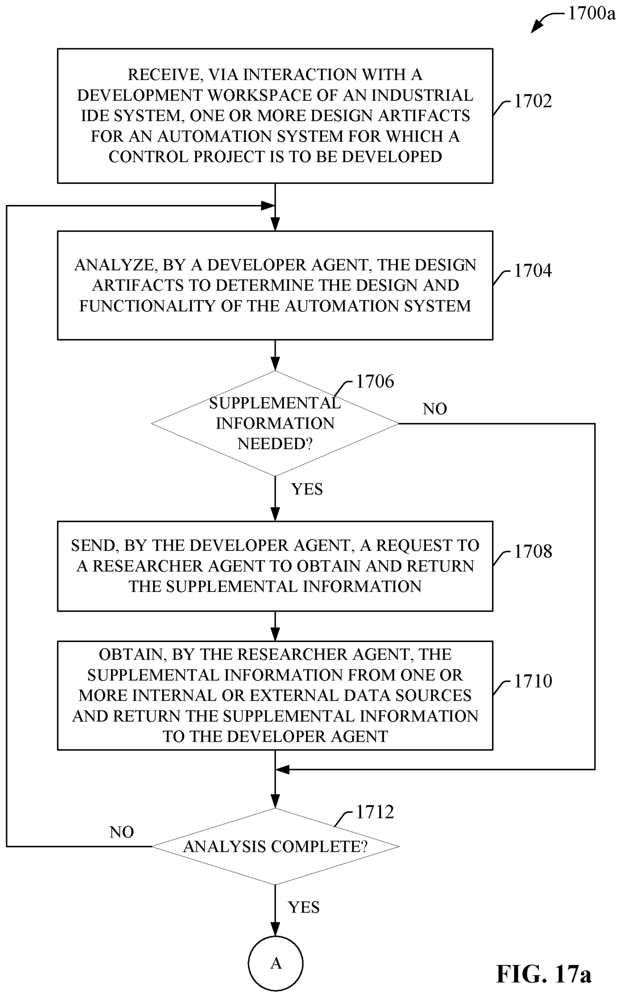

FIGs 17a-20a illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 17a illustrates a first part of an example methodology 1700a for translating, using AI-enabled agents, a set of design artifacts for an industrial automation system into a system project for configuring, monitoring, controlling, or visualizing the automation system. Initially, at 1702, one or more design artifacts for an automation system for which a control project is to be developed are received via interaction with a development workspace of an industrial IDE system. These design artifacts can include, but is not limited to, text-based functional specification documents, engineering drawings (e.g., mechanical drawings, electrical drawings including controller I/O drawings, network drawings, etc.), spreadsheets containing I/O or networking information, or other such engineering documents. At 1704, the design artifacts received at step 1702 are analyzed by a generative AI-enabled developer agent during an explore stage, in which the developer agent determines the design and functionality of the automation system based on the analysis performed on the design artifacts.

At 1706, during this explore stage, the developer agent determines whether supplemental information is needed in order to determine the components and functionalities of the automation system from the design artifacts. If so (YES at step 1706), the methodology proceeds to step 1708, where a request is sent by the developer agent to a researcher agent to obtain and return the necessary information. The researcher agent is capable of searching for information from one or more internal or external data sources, including but not limited to, QA databases, vendor-specific product specification documents for industrial devices or machines, local or remote help files, sources of industrial design knowledge or industrial standards associated with specific industrial verticals (e.g., food and beverage, pharmaceuticals, automotive, textiles, mining, die casting, etc.), sources of information regarding industrial safety standards, or other such information sources. Additionally, one or both of the researcher agent and the developer agent are capable of prompting a generative AI model for responses that can assist those agents in performing their functions. At 1710, the researcher agent obtains the supplemental information from one or more of the internal or external data sources and returns this supplemental information to the developer agent.

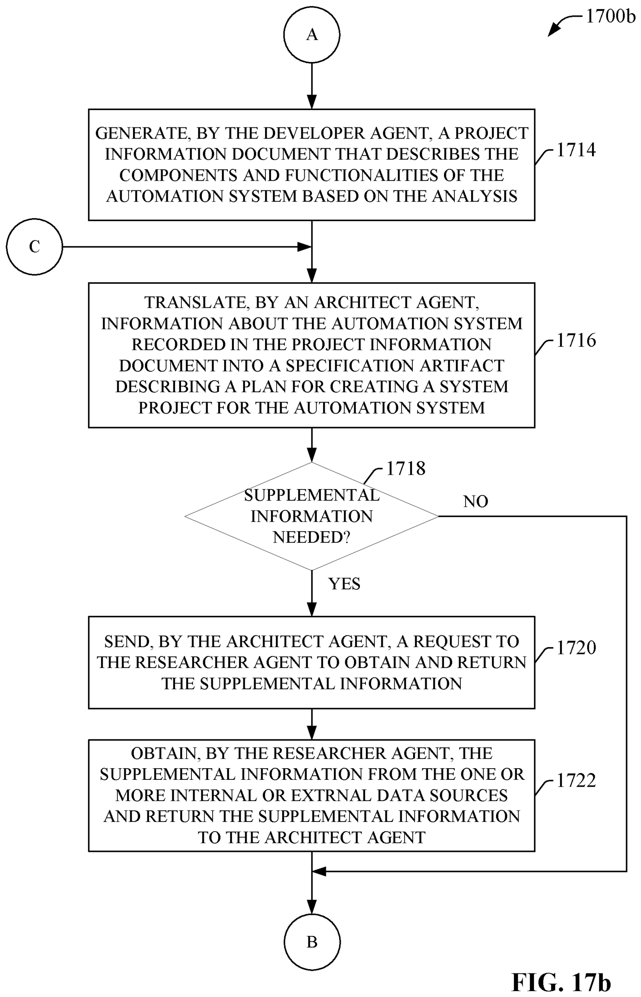

At 1712, a determination is made as to whether analysis of the design artifacts is complete. Analysis is considered complete when the agents have learned sufficient information about the automation system from the design artifacts that a plan for creating a system project for configuring, controlling, or visualizing the automation system can be developed. If the analysis is not complete (NO at step 1712), the methodology returns to step 1704. Steps 1704-1710 are repeated until the analysis of the design artifacts is complete (YES at step 1712), at which time the methodology proceeds to the second part 1700b illustrated in FIG. 17b.

At 1714, a project information document is generated by the developer agent based on the analysis performed by steps 1704-1710). The project information document describes the components (e.g., machines, devices, etc.) and functionalities of the automation system, and is to be used as a guide for creating a system project for configuring, monitoring, controlling, or visualizing the automation system. After the project information document has been created, the agents initiate a plan stage. At 1716, an architect agent translates information about the system project recorded in the project information document into a specification artifact describing a plan for creating a system project for the automation system. The specification artifact identifies elements (e.g., control routines, HMI display screens, device configurations, etc.) or functional requirements that need to be created for the system project to support the automation system represented by the design documents. The specification artifact represents a design strategy - including descriptions of the project elements and their associated functions that will be required for the system project- that can be used by the agents as a guide for creating the project elements during a subsequent build stage.

As in the explore stage, the architect agent can be assisted by the researcher agent as needed. Accordingly, at 1718, determination is made as to whether the architect agent requires supplemental information from the researcher agent to assist in translating the project information document into a specification artifact. If so (YES at step 1718), the methodology proceeds to step 1720, where the architect agent sends a request to the researcher agent to obtain and return the supplemental information. At 1722, the researcher agent obtains the supplemental information from one or more of the internal or external data sources and returns the supplemental information to the architect agent. Like the developer and researcher agents, the architect agent may also be capable of prompting the generative AI model for responses that can assist in translating the information about the automation system encoded in the project information document into an accurate specification artifact.

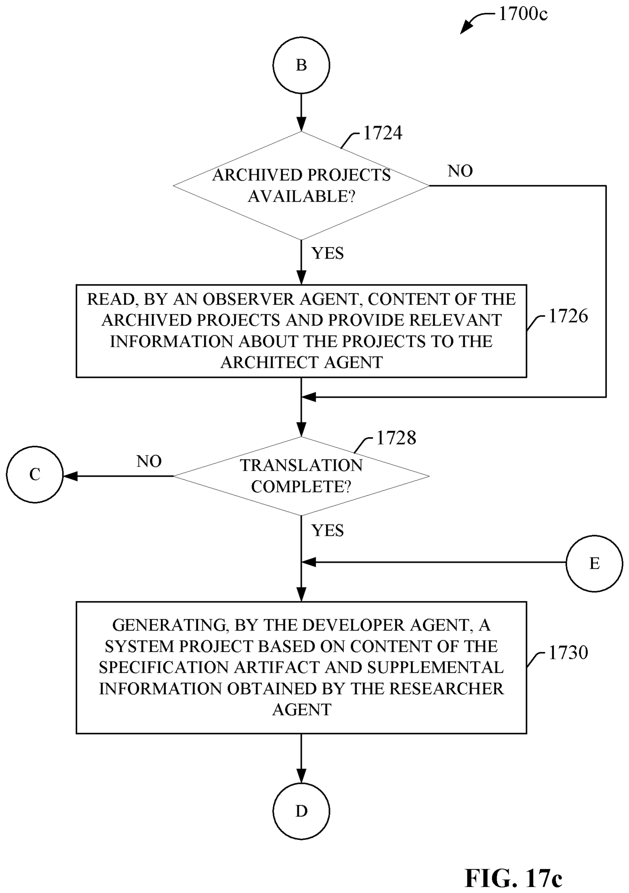

The methodology then proceeds to the third part 1700c illustrated in FIG. 17c. At 1724, a determination is made as to whether archived system projects are available to the agents, which can be analyzed to determine project design elements that may be suitable for the automation system currently under examination. If archived projects are available (YES at step 1424), the methodology proceeds to step 1726, where an observer agent reads content of the archived projects and provides information about the projects that may be relevant to the currently examined automation project to the architect agent. The observer agent, which is designed to read and understand content of a system project, can identify archived system projects for automation system deemed to be similar or relevant to the automation system currently under examination (e.g., automation systems that perform a similar industrial application), and analyze these archived system projects to identify, for example, common project design aspects may be relevant to the new automation system. The observer agent can then provide this information to the architect agent. This information can assist the architect agent in formulating portions of the design plan for the new automation system and updating the specification artifact accordingly.

At 1728, a determination is made as to whether translation of the project information document into a specification artifact is complete. If the translation is not complete (NO at step 1728), the methodology returns to step 1716. Steps 1716-1728 are repeated until a completed specification artifact has been created (YES at step 1728). The methodology then proceeds to step 1730 where, during a build stage, the developer agent generates a system project based on content of the specification artifact and supplemental information obtained by the researcher agent. The system project can comprise one or more of control code that, when executed on an industrial controller, cause the industrial controller to monitor and control the automation system in accordance with the specification artifact, an HMI application that defines display screens for visualizing status and operational data for the automation system, device configuration settings that can be downloaded to corresponding industrial devices to facilitate configuration of those devices, or other such configuration or control components.

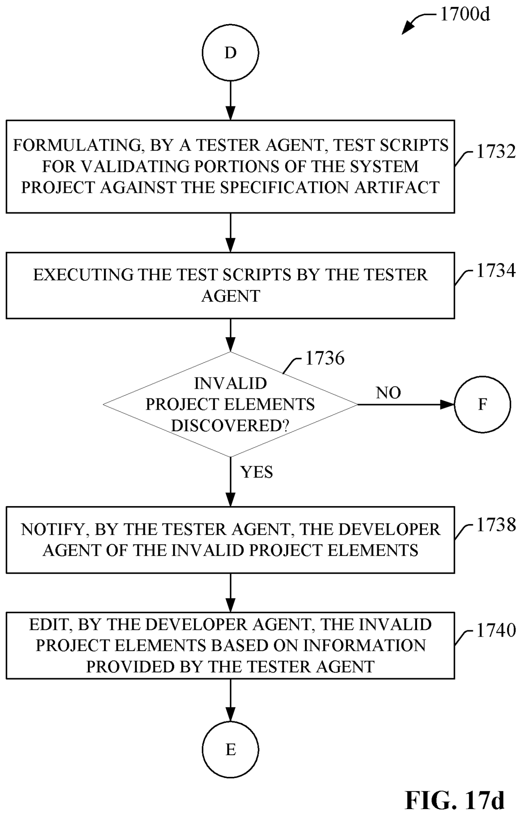

The methodology then proceeds to the fourth part 1700d illustrated in FIG. 17d. At 1732, a tester agent formulates test scripts for validating portions of the system project created at step 1730 against the specification artifact. These test scripts are designed to debug their corresponding portions of the system project or to verify that those portions execute as required by the design requirements recorded in the specification artifact. Similar to the other agents, the tester agent can, as needed, prompt the generative AI model for responses that can assist in formulating suitable test scripts for validating the system project. The tester agent can also, as needed, request supplemental information from the researcher agent that may assist the tester agent in formulating the test scripts. At 1734, the tester agent executes the test scripts against the system project. At 1736, a determination is made as to whether invalid project elements are discovered based on results of the test script executions. If so (YES at step 1736), the methodology proceeds to step 1738, where the tester agent notifies the developer agent of the invalid project elements. At 1740, the developer agent edits the invalid project elements based on the information provided by the tester agent 1740.

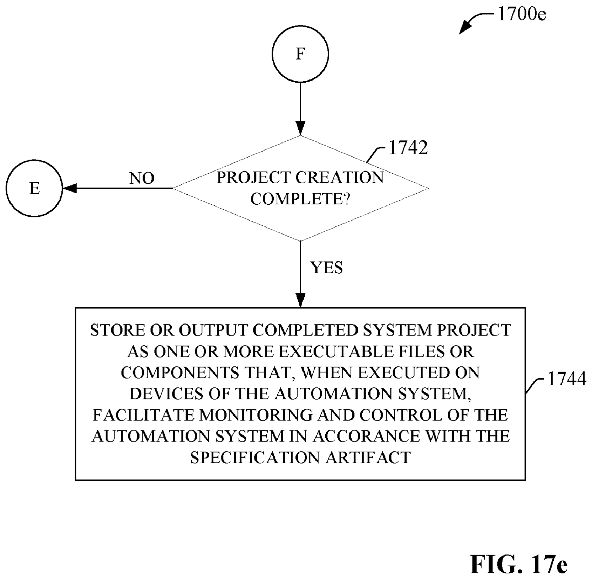

The methodology then proceeds to the fifth part 1700e illustrated in FIG. 17e. At 1742, a determination is made as to whether creation of the system project is complete. The project is considered complete when the generated project is validated by the tester agent. If additional development is required (NO at step 1742), the methodology returns to step 1730, and steps 1730-1742 are repeated as necessary until a fully validated system project for the automation system has been created. When the project is complete (YES at step 1742), the methodology proceeds to step 1744, where the completed system project is stored or output as one or more executable files or components that, when executed on devices of the automation system, facilitate monitoring and controlling of the automation system in accordance with the specification artifact that was created at step 1716.

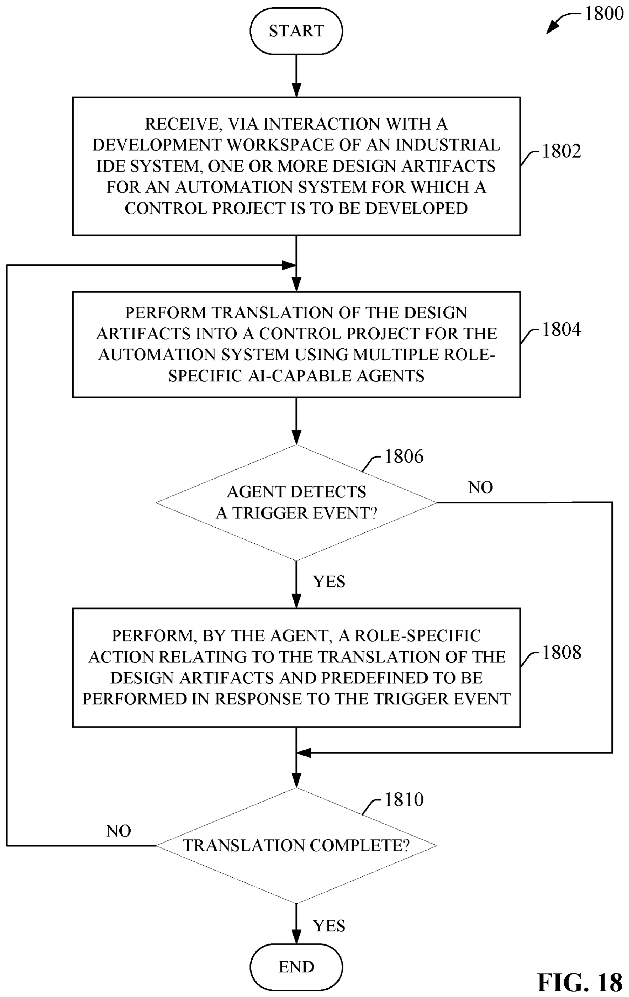

FIG. 18 illustrates an example methodology 1800 for using AI-enabled agents that support workflow triggers to translate design artifacts for an automation system into a control project for monitoring, controlling, or visualizing the automation system. Initially, at 1802, one or more design artifacts for an automation system for which a control project is to be developed are received via interaction with a development workspace of an industrial IDE system (similar to step 1702 of methodology 1700a). At 1804, multiple role-specific AI-capable agents perform translation of the design artifacts received at step 1802 into a control project for monitoring, controlling, or visualizing the automation system represented by the design artifacts. The translation performed by step 1804 can be carried out using the methodology described above in connection with FIGs. 17a-17e.

At 1806, a determination is made as to whether one of the agents detects a trigger event that the agent has been trained to recognize as a trigger for performing a role-specific action. In general, agents can be configured to recognize workflow triggers that are defined in terms of design actions or events that, when detected by the agent, cause that agent to perform a related action intended to assist with those detected design actions. These triggers or events can be design actions performed by a human user interacting with the IDE system or by other agents. In some cases, the agents can be configured with rules that explicitly specify the design trigger that is to execute a corresponding action. In addition or alternatively, the agents can be configured to learn patterns of design activity by monitoring the design actions performed by the user or by other agents over time, and automatically define triggers and corresponding design actions based on these learned patterns. Example actions that can be performed by the agents in response to detected triggers or events can include, but are not limited to, retrieval of a type of information by the researcher agent, creation or configuration of a project element by the developer agent, creation of a test script by the tester agent, implementation of a specific type of update to the design plan recorded in the specification artifact by the architect agent, implementation of a specific type of update to the project information document by the developer agent, formulating and submitting a specific type of prompt to the generative AI model, or other such actions.

If an agent detects a trigger event (YES at step 1806), the methodology proceeds to step 1808, where the agent performs a role-specific action relating to the translation of the design artifacts and predefined to be performed in response to the trigger event. Alternatively (NO at step 1806), the methodology proceeds directly to 1810 without performing the trigger-driven action.

At 1810, a determination is made as to whether translation of the design artifacts into the control project is complete. If translation is not complete (NO at step 1810), the methodology returns to step 1804. Steps 1804-1810 are repeated until translation is complete (YES at step 1810), at which time the methodology ends.

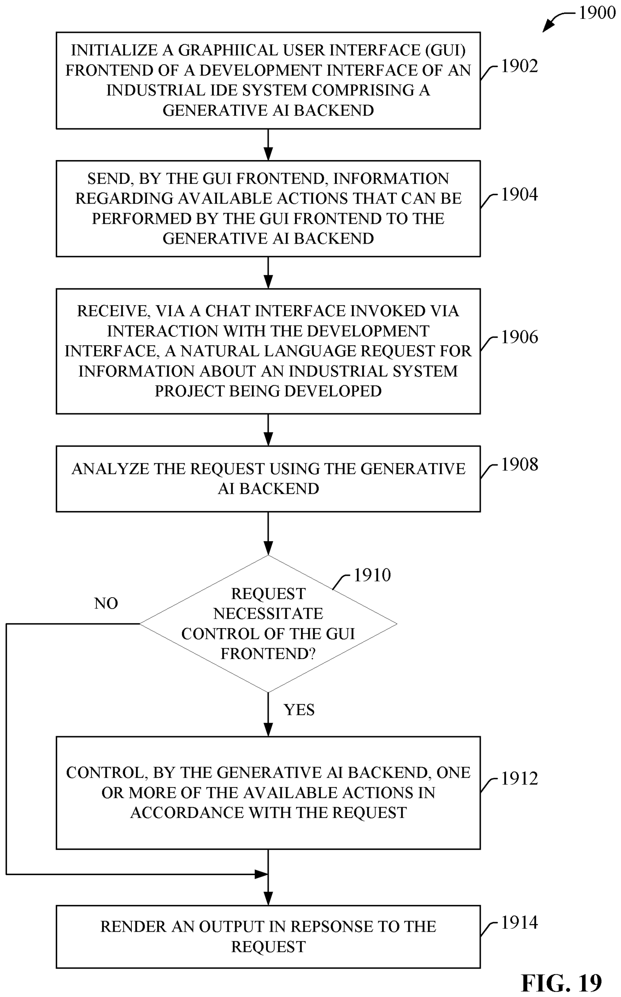

FIG. 19 illustrates an example methodology 1900 for controlling the user interface frontend of an industrial IDE system using a IDE system's generative AI backend. Initially, at 1902, a graphical user interface (GUI) frontend of the development interface of an industrial IDE system is initialized. The industrial IDE comprises a generative AI backend for supporting AI-assisted development of industrial system projects. At 1904, the GUI frontend sends information regarding available actions that can be performed by the GUI frontend to the generative AI backend. These actions can include, for example, opening GUI panels or tabs, changing the color scheme or theme of the GUI, navigating to a display screen, opening a data tag editor, opening a control code editor, or other such GUI functions.

At 1906, a natural language request for information about an industrial system project being developed on the industrial IDE system is received via a chat interface of the IDE system's development interface. At 1908, the request is analyzed using the IDE system's generative AI backend. At 1910, a determination is made as to whether the request received at step 1906 necessitates control of the GUI frontend. For example, the request may require navigation to a different display screen of the IDE system's development interface, changing of a color scheme of the development interface, opening an editing window, or other such GUI actions. If the request necessitates control of the GUI frontend (YES at step 1910), the methodology proceeds to step 1912, where the generative AI backend controls one or more of the available GUI actions in accordance with the request. At 1914, an output in response to the request is generated and rendered by the generative AI backend. If the request received at step 1906 does not necessitate control of the GUI frontend (NO at step 1910), step 1914 is performed without controlling the GUI at step 1912.

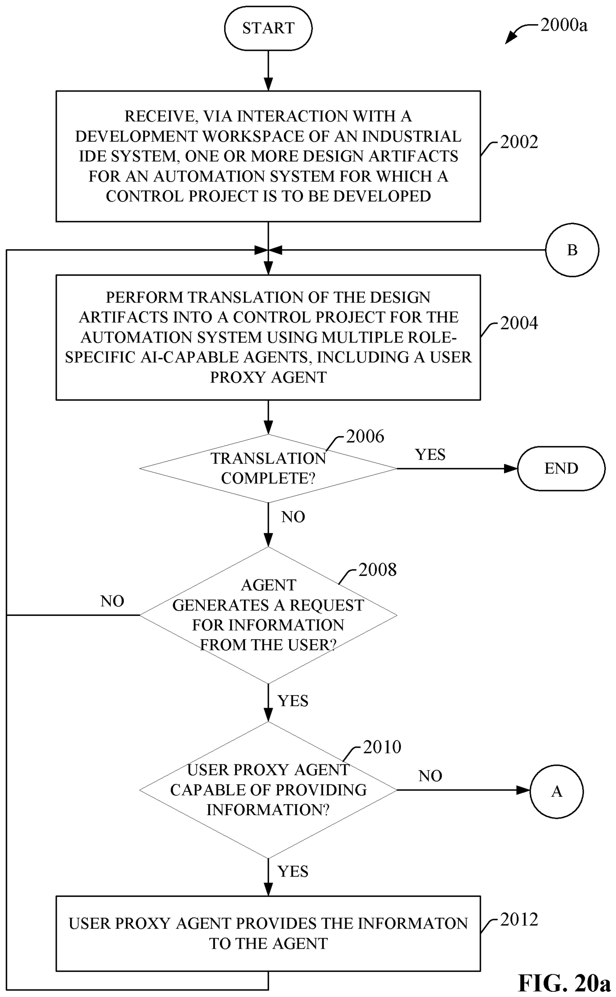

FIG. 20a illustrates a first part of an example methodology 2000a for using AI-capable agents, including a user proxy agent, to translate a set of design artifacts for an industrial automation system into a system project for configuring, monitoring, controlling, or visualizing the automation system. Initially, at 2002, one or more design artifacts for an automation system for which a control project is to be developed are received via interaction with a development workspace of an industrial IDE system (similar to step 1802 of methodology 1800 described above). At 2004, translation of the design artifacts into a control project for the automation system is performed using multiple role-specific, AI-capable agents (similar to step 1804 of methodology 1800 described above). The agents include a user proxy agent that acts as a mediator between the human user and the agents, and that also monitors and coordinates the analysis and project generation activities of the agents.

At 2006, a determination is made as to whether translation of the design artifacts into a system project is complete. If translation is complete, the methodology ends. Alternatively, if translation is not complete (NO at step 2006), the methodology proceeds to step 2008, where a determination is made as to whether one of the agents, in the course of assisting with the translation, generates a request for information from the human user. This may be, for example, a request for clarification regarding the desired functionality of the automation system, a confirmation regarding devices or machines assumed to be part of the automation system, a request to select between multiple available design options for an aspect of the system project, or other such requests.

If an agent generates such a request (YES at step 2008), the methodology proceeds to step 2010, where the user proxy agent determines whether it is capable of providing the requested information without prompting the user. In this regard, the user proxy agent may have access to sufficient information - including information that was previously submitted by the user (answers to previous questions generated by the agents, previous design requests, etc.), information that was generated by a different agent that provides insight into the required information, etc. - to be able to provide the information requested by the agent. If the user proxy agent is capable of providing the requested information (YES at step 2010), the methodology proceeds to step 2012, where the user proxy agent provides the requested information to the agent. The methodology then returns to step 2004 and translation continues.

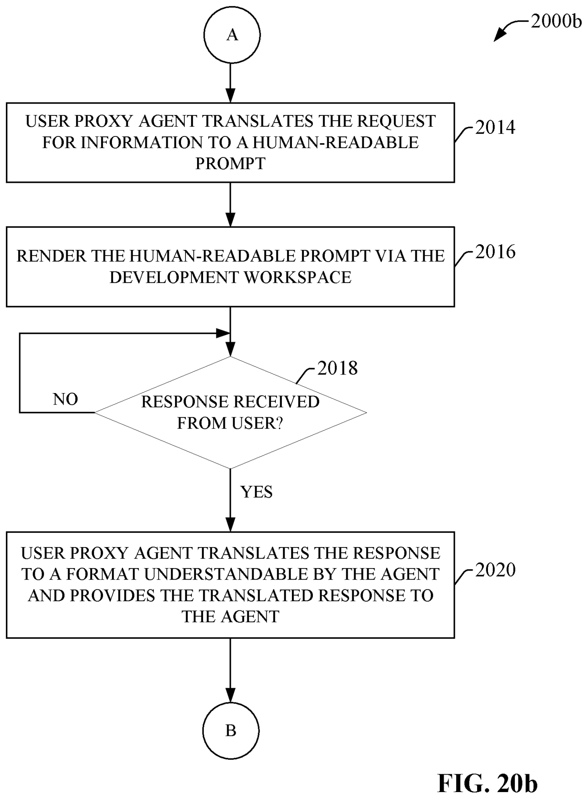

Alternatively, if the user proxy agent cannot provide the requested information (NO at step 2010), the methodology proceeds to the second part 2000b illustrated in FIG. 20b. At 2014, the user proxy agent translates the agent's request for information to a human-readable natural language prompt. At 2016, the human-readable prompt is rendered via the IDE system's development workspace. At 2018, a determination is made as to whether a response to the human-readable prompt is received from the user. When a response is received (YES at step 2018), the methodology proceeds to step 2020, where the user proxy agent translate the response to a format understandable by the agent that requested the information and provides the translated response to the agent. The methodology then returns to step 2004 and the translation continues.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate via the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

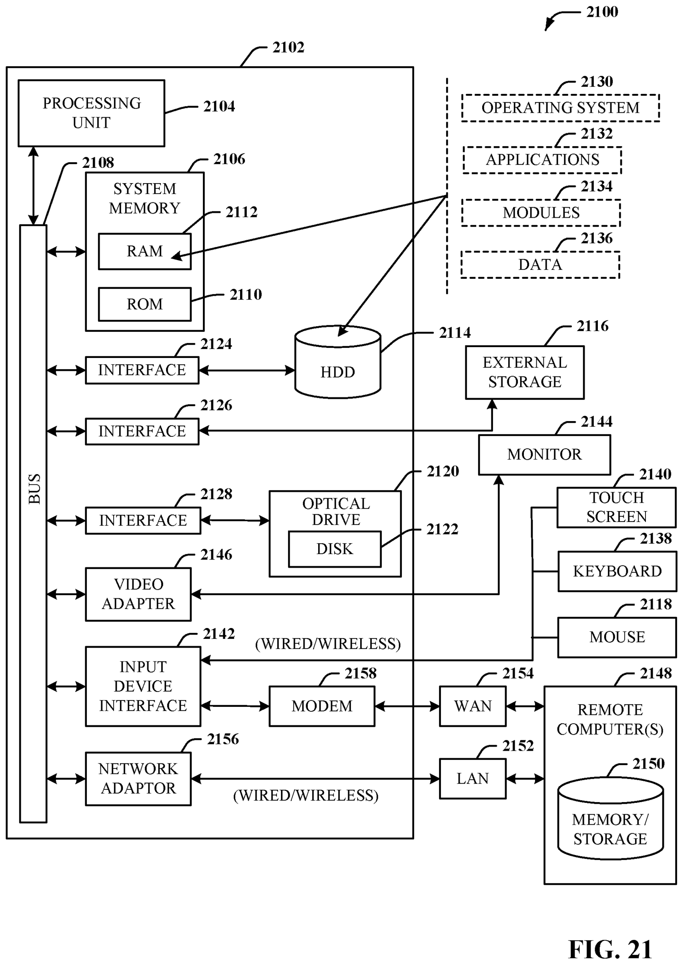

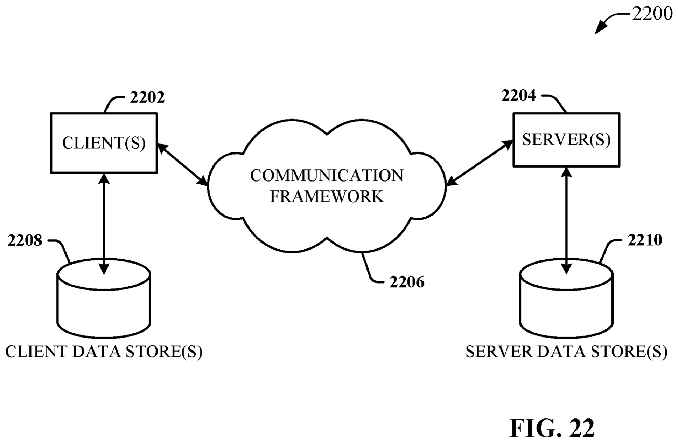

In order to provide a context for the various aspects of the disclosed subject matter, FIGs. 21 and 22 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 21, the example environment 2100 for implementing various embodiments of the aspects described herein includes a computer 2102, the computer 2102 including a processing unit 2104, a system memory 2106 and a system bus 2108. The system bus 2108 couples system components including, but not limited to, the system memory 2106 to the processing unit 2104. The processing unit 2104 can be any of various commercially available processors. Dual microprocessors and other multi-processor architectures can also be employed as the processing unit 2104.

The system bus 2108 can be any of several types of bus structure that can further interconnect to a memory bus (with or without a memory controller), a peripheral bus, and a local bus using any of a variety of commercially available bus architectures. The system memory 2106 includes ROM 2110 and RAM 2112. A basic input/output system (BIOS) can be stored in a non-volatile memory such as ROM, erasable programmable read only memory (EPROM), EEPROM, which BIOS contains the basic routines that help to transfer information between elements within the computer 2102, such as during startup. The RAM 2112 can also include a high-speed RAM such as static RAM for caching data.

The computer 2102 further includes an internal hard disk drive (HDD) 2114 (e.g., EIDE, SATA), one or more external storage devices 2116 (e.g., a magnetic floppy disk drive (FDD) 2116, a memory stick or flash drive reader, a memory card reader, etc.) and an optical disk drive 2120 (e.g., which can read or write from a CD-ROM disc, a DVD, a BD, etc.). While the internal HDD 2114 is illustrated as located within the computer 2102, the internal HDD 2114 can also be configured for external use in a suitable chassis (not shown). Additionally, while not shown in environment 2100, a solid state drive (SSD) could be used in addition to, or in place of, an HDD 2114. The HDD 2114, external storage device(s) 2116 and optical disk drive 2120 can be connected to the system bus 2108 by an HDD interface 2124, an external storage interface 2126 and an optical drive interface 2128, respectively. The interface 2124 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 2102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 2112, including an operating system 2130, one or more application programs 2132, other program modules 2134 and program data 2136. All or portions of the operating system, applications, modules, and/or data can also be cached in the RAM 2112. The systems and methods described herein can be implemented utilizing various commercially available operating systems or combinations of operating systems.

Computer 2102 can optionally comprise emulation technologies. For example, a hypervisor (not shown) or other intermediary can emulate a hardware environment for operating system 2130, and the emulated hardware can optionally be different from the hardware illustrated in FIG. 20. In such an embodiment, operating system 2130 can comprise one virtual machine (VM) of multiple VMs hosted at computer 2102. Furthermore, operating system 2130 can provide runtime environments, such as the Java runtime environment or the .NET framework, for application programs 2132. Runtime environments are consistent execution environments that allow application programs 2132 to run on any operating system that includes the runtime environment. Similarly, operating system 2130 can support containers, and application programs 2132 can be in the form of containers, which are lightweight, standalone, executable packages of software that include, e.g., code, runtime, system tools, system libraries and settings for an application.

Further, computer 2102 can be enable with a security module, such as a trusted processing module (TPM). For instance with a TPM, boot components hash next in time boot components, and wait for a match of results to secured values, before loading a next boot component. This process can take place at any layer in the code execution stack of computer 2102, e.g., applied at the application execution level or at the operating system (OS) kernel level, thereby enabling security at any level of code execution.

A user can enter commands and information into the computer 2102 through one or more wired/wireless input devices, e.g., a keyboard 2138, a touch screen 2140, and a pointing device, such as a mouse 2118. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 2104 through an input device interface 2144 that can be coupled to the system bus 2108, but can be connected by other interfaces, such as a parallel port, an IEEE 1394 serial port, a game port, a USB port, an IR interface, a BLUETOOTH^{®} interface, etc.

A monitor 2144 or other type of display device can be also connected to the system bus 2108 via an interface, such as a video adapter 2146. In addition to the monitor 2144, a computer typically includes other peripheral output devices (not shown), such as speakers, printers, etc.

The computer 2102 can operate in a networked environment using logical connections via wired and/or wireless communications to one or more remote computers, such as a remote computer(s) 2148. The remote computer(s) 2148 can be a workstation, a server computer, a router, a personal computer, portable computer, microprocessor-based entertainment appliance, a peer device or other common network node, and typically includes many or all of the elements described relative to the computer 2102, although, for purposes of brevity, only a memory/storage device 2150 is illustrated. The logical connections depicted include wired/wireless connectivity to a local area network (LAN) 2152 and/or larger networks, e.g., a wide area network (WAN) 2154. Such LAN and WAN networking environments are commonplace in offices and companies, and facilitate enterprise-wide computer networks, such as intranets, all of which can connect to a global communications network, e.g., the Internet.

When used in a LAN networking environment, the computer 2102 can be connected to the local network 2152 through a wired and/or wireless communication network interface or adapter 2156. The adapter 2156 can facilitate wired or wireless communication to the LAN 2152, which can also include a wireless access point (AP) disposed thereon for communicating with the adapter 2156 in a wireless mode.

When used in a WAN networking environment, the computer 2102 can include a modem 2158 or can be connected to a communications server on the WAN 2154 via other means for establishing communications over the WAN 2154, such as by way of the Internet. The modem 2158, which can be internal or external and a wired or wireless device, can be connected to the system bus 2108 via the input device interface 2142. In a networked environment, program modules depicted relative to the computer 2102 or portions thereof, can be stored in the remote memory/storage device 2150. It will be appreciated that the network connections shown are example and other means of establishing a communications link between the computers can be used.

When used in either a LAN or WAN networking environment, the computer 2102 can access cloud storage systems or other network-based storage systems in addition to, or in place of, external storage devices 2116 as described above. Generally, a connection between the computer 2102 and a cloud storage system can be established over a LAN 2152 or WAN 2154 e.g., by the adapter 2156 or modem 2158, respectively. Upon connecting the computer 2102 to an associated cloud storage system, the external storage interface 2126 can, with the aid of the adapter 2156 and/or modem 2158, manage storage provided by the cloud storage system as it would other types of external storage. For instance, the external storage interface 2126 can be configured to provide access to cloud storage sources as if those sources were physically connected to the computer 2102.

The computer 2102 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 22 is a schematic block diagram of a sample computing environment 2200 with which the disclosed subject matter can interact. The sample computing environment 2200 includes one or more client(s) 2202. The client(s) 2202 can be hardware and/or software (e.g., threads, processes, computing devices). The sample computing environment 2200 also includes one or more server(s) 2204. The server(s) 2204 can also be hardware and/or software (e.g., threads, processes, computing devices). The servers 2204 can house threads to perform transformations by employing one or more embodiments as described herein, for example. One possible communication between a client 2202 and servers 2204 can be in the form of a data packet adapted to be transmitted between two or more computer processes. The sample computing environment 2200 includes a communication framework 2206 that can be employed to facilitate communications between the client(s) 2202 and the server(s) 2204. The client(s) 2202 are operably connected to one or more client data store(s) 2208 that can be employed to store information local to the client(s) 2202. Similarly, the server(s) 2204 are operably connected to one or more server data store(s) 2210 that can be employed to store information local to the servers 2204.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system, comprising:
a memory that stores executable components; and
a processor, operatively coupled to the memory, that executes the executable components, the executable components comprising:
a user interface component configured to render an integrated development environment (IDE) interface and to import, via the IDE interface, one or more design artifacts comprising engineering documentation for an industrial automation system;
a generative artificial intelligence (AI) component configured to, using trained collaborative agents having generative Al capabilities, generate a functional summary of the industrial automation system based on analysis of the design artifacts, formulate a design strategy for creating a system project for monitoring and controlling the industrial automation system based on analysis of the functional summary, and generate the system project in accordance with the design strategy; and
a project generation component configured to output the system project generated by the trained collaborative agents, the system project comprising at least control code that, in response to execution on an industrial controller, causes the industrial controller to monitor and control the industrial automation system.

2. The system of claim 1, wherein the trained collaborative agents are trained with, or access a source of, industrial training data comprising at least one of libraries of control code instructions or add-on instructions, control code samples or smart objects that encapsulate reusable control code, user-defined data types, product manuals for industrial devices, programming manuals for software platforms, help files, vendor knowledgebase data, training documentation, information defining industrial design standards for one or more industrial verticals, design standards for various types of industrial control applications, information regarding industrial best practices, control design rules, or industrial domain-specific language (DSL) syntax data; and/or
wherein the trained collaborative agents are configured to prompt a generative Al model for information used to at least one of generate the functional summary, formulate the design strategy, or generate the system project.

3. The system of claim 1 or 2, wherein trained collaborative agents are configured to generate the functional summary based on at least one of identities of devices or machines of the industrial automation system identified based on the analysis of the design artifacts, functional relationships between the machines or devices as identified based on the analysis of the design artifacts, a type of industrial application or function that the industrial automation system is designed to perform as determined based on the analysis of the design artifacts, or products or recipes that the industrial automation system is designed to support as determined based on the analysis of the design artifacts.

4. The system of claim 3, wherein the trained collaborative agents include at least
a developer agent that performs the analysis of the design artifacts, and
a researcher agent that locates and retrieves supplemental information from one or more data sources that is used by the developer agent in connection with the analysis of the design artifacts.

5. The system of any one of claims 1 to 4, wherein
the trained collaborative agents generate a specification artifact describing the design strategy formulated based on analysis of the functional summary,
the specification artifact describes project elements to be included in the system project, and
the project elements comprise at least one of a control code routine, a configuration for a device of the industrial automation system, an operating mode for the device, or a human-machine interface (HMI) screen for visualizing operational and status information for the industrial automation system.

6. The system of claim 5, wherein the trained collaborative agents include at least
an architect agent that generates the specification artifact based on analysis of the functional summary,
a researcher agent that locates and retrieves supplemental information from one or more data sources that is used by the architect agent in connection with the analysis of the functional summary and formulation of the design strategy, and
an observer agent that identifies, based on analysis of an archived system project, design aspects of the archived system project that are relevant to the industrial automation system represented by the design artifacts, and provides information about the design aspects to the architect agent.

7. The system of claim 5, wherein the trained collaborative agents formulate the design strategy further based on natural language design requests submitted via interaction with the IDE interface and prompted by the trained collaborative agents; and/or
wherein the trained collaborative agents include at least
a developer agent that generates the system project based on analysis of the specification artifact,
a researcher agent that locates and retrieves supplemental information from one or more data sources that is used by the developer agent in connection with the generation of the system project, and
a tester agent that formulates and executes a test script designed to verify that a portion of the system project complies with the specification artifact.

8. The system of any one of claims 1 to 7, wherein the design artifacts comprise at least one of a text-based functional specification document, a mechanical drawing, an electrical drawing, a controller I/O drawing, a network drawing, a piping and instrumentation diagram drawing, a spreadsheet containing information about the industrial automation system, a bill of materials, or a document describing in-house control design preferences.

9. A method, comprising:
rendering, by an industrial integrated development environment (IDE) system comprising a processor, an IDE interface on a client device;
importing, by the industrial IDE system via the IDE interface, one or more design artifacts comprising engineering documentation for an industrial automation system;
generating, by the industrial IDE system using trained collaborative agents having generative Al capabilities, a functional summary of the industrial automation system based on analysis of the design artifacts;
formulating, by the industrial IDE system using the trained collaborative agents, a design strategy for creating a system project for monitoring and controlling the industrial automation system based on analysis of the functional summary;
generating, by the industrial IDE system using the trained collaborative agents, the system project in accordance with the design strategy; and
outputting, by the industrial IDE system, the system project generated by the trained collaborative agents, wherein the system project comprises at least control code that, in response to execution on an industrial controller, causes the industrial controller to monitor and control the industrial automation system.

10. The method of claim 9, wherein at least one of:
the training data comprising at least one of control code instructions or add-on instructions, control code samples or smart objects that encapsulate reusable control code, user-defined data types, product manuals for industrial devices, programming manuals for software platforms, help files, vendor knowledgebase data, training documentation, information defining industrial design standards for one or more industrial verticals, design standards for various types of industrial control applications, information regarding industrial best practices, control design rules, or industrial domain-specific language (DSL) syntax data;
the formulating of the functional summary comprises generating the functional summary based on at least one of identities of devices or machines of the industrial automation system identified based on the analysis of the design artifacts, functional relationships between the machines or devices as identified based on the analysis of the design artifacts, a type of industrial application or function that the industrial automation system is designed to perform as determined based on the analysis of the design artifacts, or products or recipes that the industrial automation system is designed to support as determined based on the analysis of the design artifacts;
the generating of the functional summary comprises:
performing, by a developer agent of the trained collaborative agents, the analysis of the design artifacts, and
retrieving, by a researcher agent of the trained collaborative agents, supplemental information from one or more data sources that is used by the developer agent in connection with the analysis of the design artifacts;
the design artifacts comprise at least one of a text-based functional specification document, a mechanical drawing, an electrical drawing, a controller I/O drawing, a network drawing, a piping and instrumentation diagram drawing, a spreadsheet containing information about the industrial automation system, a bill of materials, or a document describing in-house control design preferences.

11. The method of claim 9 or 10, further comprising prompting, by the trained collaborative agents, a generative Al model for information used to perform at least one of the generating of the functional summary, the formulating of the design strategy, or the generating of the system project.

12. The method of any one of claims 9 to 11, wherein
the formulating of the design strategy comprises generating, by the trained collaborative agents, a specification artifact describing the design strategy formulated based on analysis of the functional summary,
the specification artifact describes project elements to be included in the system project, and
the project elements comprise at least one of a control code routine, a configuration for a device of the industrial automation system, an operating mode for the device, or a human-machine interface (HMI) screen for visualizing operational and status information for the industrial automation system.

13. The method of claim 12, wherein the formulating of the design strategy further comprises
prompting, by the trained collaborative agents, for user-provided design preferences; and
formulating the design strategy further based on natural language responses to the prompting submitted via interaction with the IDE interface.

14. A non-transitory computer-readable medium having stored thereon instructions that, in response to execution, cause an industrial integrated development environment (IDE) system comprising a processor to perform operations, the operations comprising:
rendering an IDE interface on a client device;
importing, via the IDE interface, one or more design artifacts comprising engineering documentation for an industrial automation system;
generating, using trained collaborative agents having generative Al capabilities, a functional summary of the industrial automation system based on analysis of the design artifacts;
formulating, using the trained collaborative agents, a design strategy for creating a system project for monitoring and controlling the industrial automation system based on analysis of the functional summary;
generating, using the trained collaborative agents, the system project in accordance with the design strategy; and
outputting the system project generated by the trained collaborative agents, wherein the system project comprises at least control code that, in response to execution on an industrial controller, causes the industrial controller to monitor and control the industrial automation system.

15. The non-transitory computer-readable medium of claim 14, wherein the training data comprising at least one of control code instructions or add-on instructions, control code samples or smart objects that encapsulate reusable control code, user-defined data types, product manuals for industrial devices, programming manuals for software platforms, help files, vendor knowledgebase data, training documentation, information defining industrial design standards for one or more industrial verticals, design standards for various types of industrial control applications, information regarding industrial best practices, control design rules, or industrial domain-specific language (DSL) syntax data.
